# EUROPEAN PATENT APPLICATION

(11) **EP 4 506 583 A1**
(43) Date of publication of application: **12.02.2025**
(21) Application number: 23190991.2
(22) Date of filing: 11.08.2023
(51) Int. Cl.: F16D 65/00, B01D 46/00, B01D 46/44, B01D 46/46

(54) **DEVICE AND METHOD FOR CONTROLLING A FILTER SYSTEM FOR BRAKING DEVICES**

(71) Applicant: MANN+HUMMEL Ventures Pte. Ltd., Singapore 139234 (SG)
(72) Inventor: WÖRZ, Tobias, 71636 Ludwigsburg (DE); JESSBERGER, Thomas, 71636 Ludwigsburg (DE); BECK, Andreas, 71636 Ludwigsburg (DE); WÖBER, Alexander, 71636 Ludwigsburg (DE); FALLBÖHMER, Stefan, 71636 Ludwigsburg (DE); AY, Hasan Can, 71636 Ludwigsburg (DE)
(74) Representative: Mann + Hummel Intellectual Property

(57) **Abstract**

In one aspect the invention relates to a filter system (100) for one or more braking devices (200) of a vehicle (600A, 600B), the filter system comprising: a suction device (110) configured to generate an airflow (112) in a vicinity of the one or more braking devices; a filter element (120) for filtering brake dust particles generated by the one or more braking devices; an airflow channel (130) positioned to allow the airflow generated by the suction device through the filter element; a controller (140) for operating the suction device; and a processor (150) arranged in data communication with the controller, the processor configured to obtain an operating data (161, 162) of the vehicle; determine a prognosis of a braking event of the vehicle based on the operating data as input; and select a control strategy (800, 810, 900, 950) from a plurality of control strategies based on the operating data, the control strategy associated with a plurality of operation states (701, 702, 703, 704, 705); wherein the control strategy is different from another control strategy of the plurality of control strategies; and wherein the processor is configured to generate a control data to the controller indicative of an operation state of the suction device.

In a further aspect the invention relates to a method (1100) of operating a filter system (100).

## Description

### TECHNICAL FIELD

The present disclosure relates to a device and method for providing control strategy to a filter system for braking devices. The braking devices may be one or more braking device of vehicles.

### BACKGROUND ART

The following discussion of the background art is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the disclosure.

Brake dust particles produced by wear on the brake pads of the disc brakes of motor vehicles may be collected or filtered using a filtration device. Such filtration device is typically useful in preventing the brake dust particles, which may be harmful to the environment or to health, from escaping into the environment or becoming lodged on/in the rims of wheels of the vehicles.

Currently, a filter system for brake dust particles comprises a suction device provided together with a filter element in the vicinity of braking devices for vehicle wheels. The suction device may then be used to generate airflow comprising air enriched with the brake dust particles through the filter element.

However, a vehicle often operates under different road terrain and environmental conditions. Thus, the filter system may not be optimized.

Accordingly, there exists a need for an improved filter system for use with one or more braking devices of a vehicle, that seeks to address aforementioned issues.

### SUMMARY

The disclosure was conceptualized to provide an improved filter system for use with one or more braking devices of a vehicle. The filter system may be an active brake dust particle filter system having a suction device. The filter system comprises a processor, the processor being configured to obtain operation-data used for determining a probability of a braking event. A pre-conditioning of a motor of the suction device may also be used for motor control during active filtration. For example, when a probability of braking is imminent (i.e. more than likely), or above a pre-determined probability, the motor of the suction device may increase its rotational frequency towards a full braking frequency. In a vehicle there may be a filter system associated with a braking device, for example as a one to one correspondence, or a common filter system may filter the particles coming from two or more braking devices.

According to one aspect of the disclosure, there is provided a filter system for one or more braking devices of a vehicle, the filter system comprising: a suction device configured to generate an airflow in a vicinity of the one or more braking devices; a filter element for filtering brake dust particles generated by the one or more braking devices; an airflow channel positioned to allow the airflow generated by the suction device through the filter element; a controller for operating the suction device; and a processor arranged in data communication with the controller, the processor configured to obtain an operating data of the vehicle; determine a prognosis of a braking event of the vehicle based on the operating data as input; and select a control strategy from a plurality of control strategies based on the operating data, the control strategy associated with a plurality of operation states; wherein the control strategy is different from another control strategy of the plurality of control strategies; and wherein the processor is configured to generate a control data indicative of the operation state of the suction device.

In some embodiments, the operation data of the vehicle comprises at least one of a driving mode data and a location data.

In some embodiments, the driving mode data comprises an express way driving mode, an urban road driving mode, and/or a congestion driving mode.

In some embodiments, the prognosis of the braking event comprises a first probability estimate of the braking event after a previous braking event, a second probability estimate of the braking event occurring within a pre-determined time period, or a third probability estimate of a next braking event after the braking event.

In some embodiments, one or more of the first, second, and third probability estimate is compared with a pre-determined threshold, and wherein the control strategy is selected based on the comparison.

In some embodiments, the plurality of control strategies comprises a first control strategy associated with the express way driving mode, a second control strategy associated with the urban road driving mode, and a third control strategy associated with the congestion driving mode.

In some embodiments, each of the first control strategy, the second control strategy, and the third control strategy comprises at least one operation profile of the suction device, wherein the at least one operation profile is formed from a plurality of operation states.

In some embodiments, the plurality of operation states comprise at least two of the following: a pre-conditioning state, an idle state, and a post-conditioning state.

In some embodiments, the first control strategy, the second control strategy, and the third control strategy differ from one another based on at least one of the following: a sequence of the plurality of operation states forming the operation profile, an operation time of any one of the pre-conditioning state, the idle state, and/or the post-conditioning state. For example, each control strategy may be in the form of data as follows {driving mode; braking type; pre-conditioning state time, full operation state time, idle state time, rest state time}

In some embodiments, the prognosis of the braking event is obtained based on inputting the operating data to an analysis module, the analysis module comprises a probability estimator, a machine learning module, or a combination of the aforementioned.

In some embodiments, the one or more braking devices comprise at least one frictional braking device.

In some embodiments, the at least one operation state comprises a disable suction device state.

In some embodiments, the disable suction device state is determined based on a positive determination of the vehicle in operating in an off-road driving mode, a race-driving mode, or wherein the vehicle is operating in an environment of an adverse weather, or an excessively polluted condition.

In some embodiments, the controller comprises a driver circuit configured to obtain the control data from the processor as input and provide a drive signal to adjust a rotational frequency of the motor based on the drive signal, for example to change an airflow, or wherein the controller is integrated with the processor to directly send the drive signal to the motor to adjust the rotational frequency, and wherein a higher rotational frequency is associated with a higher suction power of the suction device. The driver circuit may be configured to do one or conditionally both of driving the motor and adjusting the rotational frequency.

In some embodiments, the rotational frequency of the idle state is lower than the rotational frequency of the pre-conditioned state, and the rotational frequency of the rest state is lower than the rotational frequency of the idle state.

In some embodiments, the rotational frequency of the post-conditioned state is higher than the rotational frequency of the pre-conditioned state.

In some embodiments, the suction device comprises a motor, the motor comprises a driver circuit to obtain the control data from the controller and drives the motor based on the control data, or wherein the control data comprises an adjusted rotational frequency to drive the motor, and wherein a higher rotational frequency is associated with a higher suction power of the suction device.

According to another aspect of the disclosure there is a vehicle comprising one or more braking devices and a filter system positioned in the vicinity of the one or more braking devices, the filter system comprises a suction device to generate an airflow in the vicinity of the one or more braking devices, an airflow channel positioned to allow airflow generated by the suction device through a filter element, the filter element positioned to filter brake dust particles generated by the one or more braking devices within the airflow, the filter system comprising at least one processor; and a memory having instructions stored therein, the instructions, when executed by the at least one processor, causes the at least one processor to: obtain an operating data of the vehicle; determine a prognosis of a braking event of the vehicle based on the operating data as input; and select a control strategy from a plurality of control strategies based on the operating data, the control strategy associated with a plurality of operation states; wherein the control strategy is different from another control strategy of the plurality of control strategies; and wherein the processor is configured to send a control data to a controller indicative of the operation state of the suction device, the controller configured to operate the suction device based on the operation state.

According to another aspect of the disclosure there is a method of operating a filter system for one or more braking devices of a vehicle to filter brake dust particles generated by the one or more braking devices, the method comprising: obtaining, (e.g., by a processor), an operating data of the vehicle; determining (e.g., by the processor) a prognosis of a braking event of the vehicle based on the operating data as input; and selecting (e.g., by the processor) a control strategy from a plurality of control strategies based on the operating data, the control strategy associated with a plurality of operation states; wherein the control strategy is different from another control strategy of the plurality of control strategies. The processor may be configured to generate a control data to a controller indicative of the operation state of the suction device. In some embodiments, the controller may be configured to send a plurality of control data to operate the suction device based on control strategy.

According to another aspect of the disclosure there is provided a computer program product, comprising software instructions installed thereon, such that when executed on the processor, executes the method as described.

Accordingly to another aspect of the disclosure there is provided a filter system controller for providing control strategy for operating a filter system of a vehicle, the filter system comprising a processor configured to: obtain an operating data of the vehicle; determine a prognosis of a braking event of the vehicle based on the operating data as input; select a first control strategy and/or a second control strategy from a plurality of control strategies based on the operating data, the first control strategy based on a first plurality of operation states and the second control strategy based on a second plurality of operation states; wherein the first plurality of operation states is different from the second plurality of operation states.

### BRIEF DESCRIPTION OF DRAWINGS

The disclosure will be better understood with reference to the detailed description when considered in conjunction with the non-limiting examples and the accompanying drawings, in which:
- FIG. 1 shows an exemplary schematic illustration of a filter system 100 for one or more braking devices of a vehicle;
- FIGS. 2A, 2B, and 2C show various exemplary schematic illustrations of an active brake dust particle filter system configured to remove brake dust particles from a plurality of frictional braking devices;
- FIGS. 3A and 3B show schematic illustrations of some embodiments showing the suction device as an electric blower to generate an airflow of the active brake dust particle filter based on the control data(s) from a motor controller.
- FIGS. 4A and 4B show schematic illustrations of various configurations of processors and control units in a vehicle forming part of the filter system and interfacing with other components of the vehicle;
- FIGS. 5A and 5B show two possible configurations of a central communication interface or unit of a vehicle;
- FIG. 6A shows an exemplary schematic illustration of a vehicle installed with the filter system 100 and equipped with on-board sensors;
- FIG. 6B shows an exemplary schematic illustration of a vehicle installed with the filter system 100 and configured to obtain data from remote sensors and/or servers;
- FIG. 6C shows an exemplary schematic illustration of a vehicle installed with the filter system 100 and configured to obtain data from a server or other cars in a direct vehicle-to-vehicle data connection.
- FIG. 7A is a rotational frequency versus time graph for illustrating the different (enable) operation states of a suction device;
- FIG. 7B shows various examples of driving modes and types of braking;
- FIGS. 8A and 8B are flow charts depicting methods for determining various control strategies according to some embodiments;
- FIG. 8C is a flow chart of a method for estimating a probability of braking within a pre-determined time;
- FIG. 8D is an illustration of traffic information used in the some embodiments for determining a probability of braking;
- FIG. 9A is a flow chart depicting a method 900 for determining a control strategy based on an urban driving mode or a highway/ expressway driving mode of a vehicle and the corresponding braking type;
- FIGS. 9B and 9C are continuation steps associated with a mild braking type and a strong braking type of the flow chart of FIG. 9A;
- FIG. 9D is a flow chart depicting a method 950 for determining a control strategy based on a congestion driving mode of a vehicle and the corresponding braking type;
- FIG. 10A to 10C are different flow charts for determining whether a vehicle is operating in an off-road driving mode, a race-driving mode, and an adverse weather or excessively polluted environment; and
- FIG. 11 is a flow chart illustrating a method of operating a filter system.

### DETAILED DESCRIPTION

The following detailed description refers to the accompanying drawings that show, by way of illustration, specific details, and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the", and the term "at least one" as used with regard to a feature or element include a reference to one or more of the features or elements. As used herein, the term "and/or" includes any and all combinations of one or more of the associated listed items.

As used herein, the term "associate", "associated", and "associating" indicate a defined relationship (or cross-reference) between at least two items.

Throughout the description, the term "vehicle", as used herein, refers to a motor-powered vehicle, for example having 2, 3, 4, or more wheels. Examples of the vehicle include a passenger car, a truck, a bus, a lorry, or a rail vehicle, for example, a locomotive, a wagon. In some embodiments, the vehicle may be an electric vehicle or a hybrid (internal combustion engine and electrical) vehicle. In some embodiments, the vehicle may be an internal combustion engine (ICE) vehicle (i.e., non-hybrid). Vehicle may further include autonomous vehicles.

Throughout the description, the term "braking device", as used herein, includes a frictional brake but excludes hydrodynamic brakes such as parachutes. In some embodiments, a frictional brake may comprise two solids entering into contact, for example, a braking pad (or shoe) may contact a brake disc or a drum, or a wheel. With the contact, kinetic energy is converted into heat energy, and brake dust, in the form of particulate matter is generated due to the friction. It is to be appreciated that the braking device may exclude regenerative braking, so that the various brake stages and data are free of regenerative braking data.

Throughout the description, the term "filter element", as used herein, refers to an element for filtering brake dust particles generated by one or more braking devices. The filter element may include a particulate filter, for filtering particles suspended in air, for example, to filter out airborne particulate matter (PM) particles of various particle size distribution, such as PM10, PM5, PM2.5, or PM1. In some embodiments, the filter element may be a fine dust filter. In some embodiments, the filter element may form part of a filter unit to separate the harmful particles (e.g. PM10) from the air which would pollute the environment. In some embodiments, the filter element may comprise or may be formed from or of nonwoven fibers. The term filter unit may comprise at least one filter element.

Throughout the description, the term "suction device" as used herein, may broadly refer to any airflow generation unit configured to generate an airflow near the brake system via an airflow channel through a filter unit or filter element to separate the harmful particles (e.g. PM10) from the air which would pollute the environment. In some embodiments, the suction device may comprise a blower operating as a centrifugal pump, the velocity pump, or a fan, the blower configured to generate an airflow based on a negative pressure formed in an enclosed housing for filtering air enriched with the brake dust particles.

Throughout the description, the term "processor(s)", as used herein, includes one or more electrical circuits capable of processing data, i.e. processing circuits. A processor may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

Throughout the description, the term "module" refers to, or forms part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

Throughout the description, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art. The term "operating data" may be understood to include any data associated with the operation of a vehicle over a time period. Non-limiting examples include speed/velocity data, braking frequency data, braking intensity data, traffic condition data, environmental data, time of day, and/or other driving data.

Throughout the description, the term "control strategy" may be understood to refer to one or more control strategies suitable for controlling (or operating) the filter system or a suction device of the filter system, each control strategy may be associated with operating data of the vehicle and/or traffic conditions surrounding the vehicle. In some embodiments, each control strategy may comprise one or more different sets of parameters to control the suction device during a braking event. In some embodiments, the parameters may include different blower intensities (controllable by electrical current) of the suction device, and/or timings for each of the filter system operation modes (or stages). In some embodiments, a control strategy may comprise a pre-stored or pre-loaded sequence of operation states, or a real-time generated sequence of operation states. In some embodiments, a control strategy may also be adjusted during the operation of the active brake dust particle filter system.

Throughout the description, the term "obtain", as used herein, refers to the processor which actively obtains the inputs, or passively receives inputs from one or more sensors or data source. The term obtain may also refer to a processor, which receives or obtains inputs from a communication interface, e.g. a user interface. The processor may also receive or obtain the inputs via a memory, a register, and/or an analog-to-digital port.

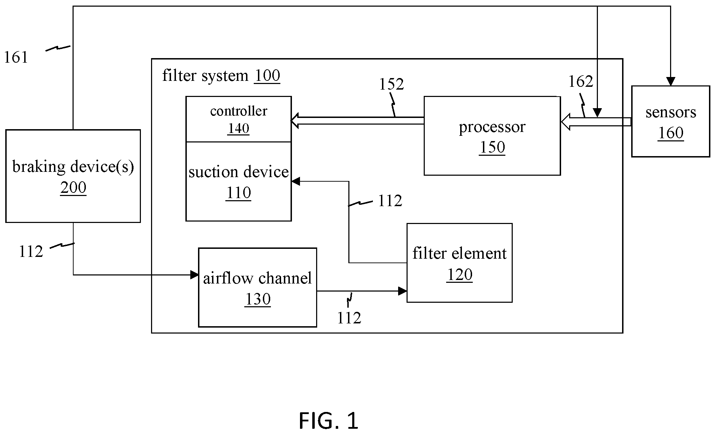

FIG. 1 shows a schematic block diagram of a filter system 100 for use with one or more braking devices 200 of a vehicle. The filter system 100 may comprise a suction device 110 configured to generate an airflow 112 in a vicinity of the one or more braking devices 200; a filter element 120 for filtering brake dust particles generated by the one or more braking devices 200; an airflow channel 130 positioned to allow the airflow 112 generated by the suction device 110 through the filter element 120. The filter system 100 may include a controller 140 for operating the suction device 110. The filter system 100 may include a processor 150 arranged in data communication with the controller 140, the processor 150 being configured to obtain an operating data 162 of the vehicle; determine a prognosis of a braking event of the vehicle based on the operating data as input; and select a control strategy from a plurality of control strategies based on the operating data, the control strategy being associated with a plurality of operation states; wherein the control strategy is different from another control strategy of the plurality of control strategies of the one or more braking devices 200. The processor 150 is configured to generate a control data 152, the control data 152 indicative of an operation state of the suction device 110. In some embodiments, the control data 152 may then be sent to the controller 140 and be converted to a drive signal 146, and/or to other circuitry to operate the suction device 110. In some embodiments, each braking device 200 of a vehicle may comprise an associated filter system 100. For example, in a vehicle having 4 braking devices 200 may have 4 associated filter system 100. Each associated filter system 100 may be independent from other filter systems 100, i.e. each associated filter system may have its independent logic and control.

In some embodiments, the processor 150 may comprise an estimator module and a selector module. The estimator module may include a prognosis engine for estimating a likelihood of a braking event occurring within a pre-determined time period. The likelihood may be expressed as a first probability estimate of the braking event after a previous braking event, a second probability estimate of the braking event occurring within a pre-determined time period, or a third probability estimate of a next braking event after the current braking event. The selector module may implement the software codes and/or logic for selecting a control strategy based on the estimator. The control data 152 may be sent based on the selected control strategy.

In some embodiments, the operation data 162 of the vehicle comprises at least one of a driving mode data and a location data. In some embodiments, the driving mode data may include braking-related data 161 obtained from the one or more braking devices 202.

In some embodiments, the operation data 162 may be obtained from one or more sensors 160. The one or more sensors 160 may be a hardware sensor, a software sensor, or a combination of hardware and software sensors. The one or more sensors 160 may include environmental sensors to sense any environmental conditions around the vehicle that can affect whether the vehicle is about to execute a braking operation. Such environmental conditions may include traffic conditions.

In some embodiments, the controller 140 may be integrated with the processor 150 to form an integrated processing module.

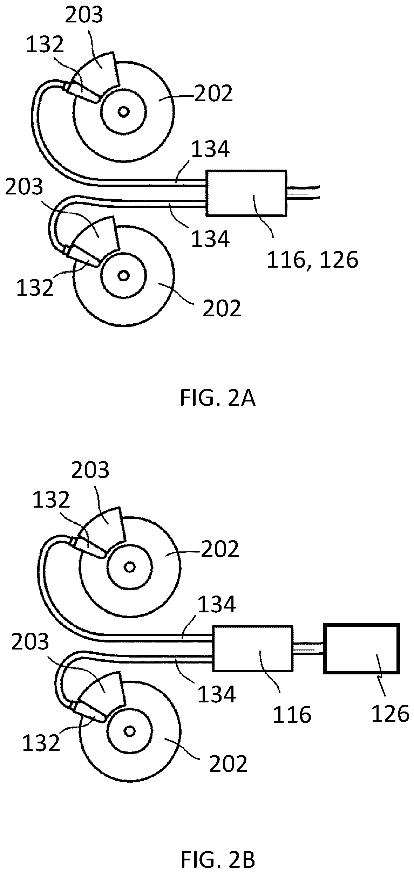

In the embodiment of FIG. 2A, a schematic illustration of a part of a vehicle, with particular emphasis on braking devices 200 of the vehicle interacting with the filter system 100 implemented as an active brake dust particle filter, is shown.

Two braking devices in the form of frictional braking devices, are shown, each with a brake disc 202 and brake pads 203. The airflow channel 130 comprises a suction nozzle 132 positioned at each braking device near the brake disc 202 and brake pads 203. The suction nozzle 132 may be shaped and dimensioned to suck brake dust particles from the brake disc 102 and brake pads 103 when the suction device 110 is enabled during a braking event, i.e. when the brake pads 203 contact the brake disc 202. Each suction nozzle 132 is fluidly connected to the suction device 110 via suction hoses 134. The suction nozzle 132 may be connected to a housing 116, which preferably contains the suction device 110 for generating the airflow (suction flow) for extracting the brake dust particles from the brake pads 103 or the brake discs 102. In FIG. 2A, the housing 116 may further include a filter unit 126, which in turn houses one or more filter elements 120.

As an alternative arrangement shown in FIG. 2B, with respect to the airflow direction, a filter unit 126, which houses one or more filter elements 120, may be positioned downstream the housing 116 which houses the suction device 110.

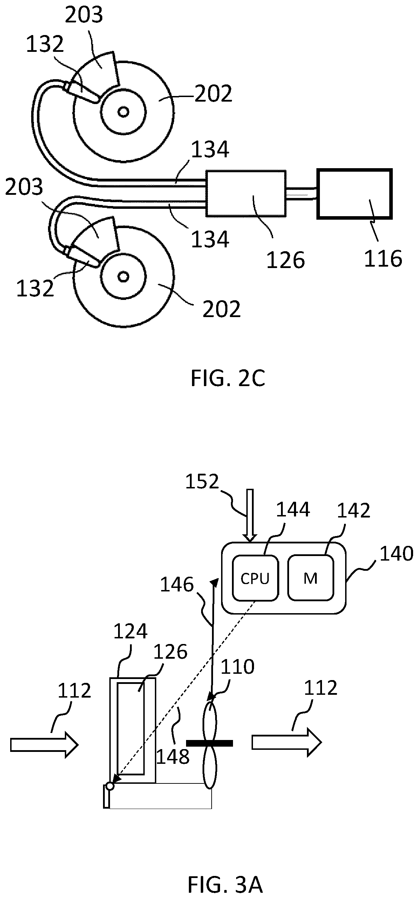

In yet another alternative arrangement shown in FIG. 2C, with respect to the airflow direction, the suction device 110 may be positioned downstream of the filter unit 126. Such an arrangement may advantageously minimize the suction device 110 from contacting the brake dust particles.

FIG. 3A shows a schematic illustration of an embodiment of the controller 140 comprising a central processing unit (CPU) 144 and a motor driver 142. The CPU 144 may be the processor 150 or a separate CPU or microcontroller (µC) configured to receive the control data from a remote processor 150. The control data may be a digital or analog signal sent to the motor driver 142 to operate the suction device 110 based on the brake-related data 162. In some embodiments, the control data 152 may be an enable suction device signal indicative of an enable suction device state of the suction device 110, or a disable suction device signal indicative of a disable suction device state of the suction device 110. In some embodiments, the enable suction device state may further include one or more operation states to form an operation profile, such as one or more operation states forming part of control strategy or forming the control strategy.

In some embodiments, the CPU 144 and motor driver 142 may be implemented as a single electronic circuit board or unit. In some embodiments, the CPU 144 may be implemented as a separate electronic circuit board or unit.

In some embodiments, the enable suction device signal and the disable suction device signal may be digital signals, such as binary signals. For example, the enable suction device signal may be a binary '1' signal, and the disable suction device signal may be a binary '0' signal. Alternatively, the enable suction device signal may be a binary '0' signal, and the disable suction device signal may be a binary '1' signal. In some embodiments, the enable signal may further include a signal to pre-condition the suction device 110. In some embodiments, the additional operation states associated with the enable suction device may be other than binary, for example, trinary, or it may be a range (e.g., encoded in 16 bits, 32 bits, 64 bits, etc.). In some embodiments, the probability of braking calculation may be based on such data, for example, in a simple case, the probability calculation may include a transfer function (in one example from trinary to binary: [0;0.5;1] -> [0;1;1], the trinary symbols could be implemented in other forms and computer data types, and notation could be binary in various number of bits, such as [00,01 ,10]). In another example, the probability of braking may be more than binary, e.g., at least trinary, whereas at 0 the blower remains unchanged (e.g., in idle, or zero), and at 0.5, the blower enters in pre-conditioning mode, and at 1 the blower goes into full braking frequency.

In some embodiments, the control data may be analog signals, and converted to the aforementioned binary or digital signals via one or more analog to digital converters (ADC).

In some embodiments, the suction device may be operated by means of a motor and the controller 140 may be a motor controller. The control data indicative of the disable suction device operation state may be converted to a drive signal 146 by the controller to switch the suction device off. The control data indicative of the enable suction device operation state may be converted to a drive signal 146 by the controller to drive a motor of the suction device 110. The drive signal 146 may be used to control the operational intensity of the suction device.

In some embodiments, the suction device 110 may be a blower fan operated by the controller 140, the suction device 110 configured as a centrifugal pump. The operational intensity may be proportional to a rotational frequency of the motor. In some embodiments, the fan may comprise at least three blades.

In some embodiments, the motor controller 140 may control the rotational frequency of the motor from a first pre-determined rotational frequency to a second pre-determined rotational frequency. In some embodiments, the blower fan frequency may be controlled from the first pre-determined rotational frequency of, for example, 5 000 revolutions-per-minute (rpm) to the second pre-determined frequency of, for example, 50 000 rpm. Controlling the blower fan may be such that, during suction, airflow is maximized while maintaining the blower temperature at an operating temperature or a range of temperature. In some embodiments, the motor controller 140 may comprise one or more temperature sensors to monitor the temperature of the blower fan.

In some embodiments, the motor controller 140 may provide a drive signal 146 to a driver circuit 142, which may in turn convert the drive signal 146 to drive the motor. In one embodiment, the drive signal 146 may be an electrical signal. The driver circuit may amplify the electrical signal to a suitable electrical value to drive the motor. The electrical signal may be, in non-limiting examples, current, voltage and/or power.

In some embodiments, the electrical power source driving the vehicle may be a battery. The battery may be a battery for operating other components of the vehicle, such as, but not limited to, an electronic control unit or engine control unit (ECU). In some embodiments, the driver circuit may be integrated with the ECU.

FIG. 3A may include one or more shutters 124 capable of being opened or closed to expose the filter unit 126 to the external environment or shield the filter unit 126 from the external environment. In some embodiments, as an alternative or in addition to sending a drive signal 146 upon detection of a control data indicative of the disable suction device operation state to switch the suction device off, a bypass signal 148 may be sent directly by the CPU 144 to the one or more shutters 124 to activate the one or more shutters 124 to close, thereby shielding the filter unit 126.

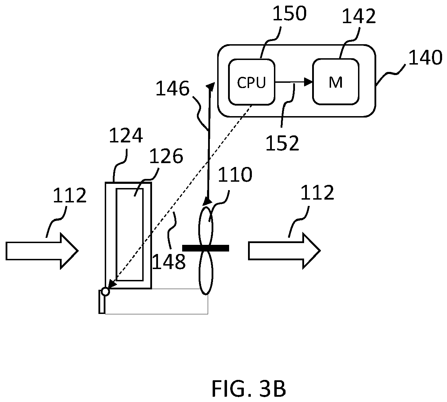

FIG. 3B shows another embodiment of the controller 140, wherein the processor 150 forms part of the controller 140 and the generated control data 152 is sent to the motor driver 142.

In the embodiment of FIG. 3A, it is appreciable that the processor 150 may be a remote processor. In some embodiments, the remote processor 150 may be a cloud server.

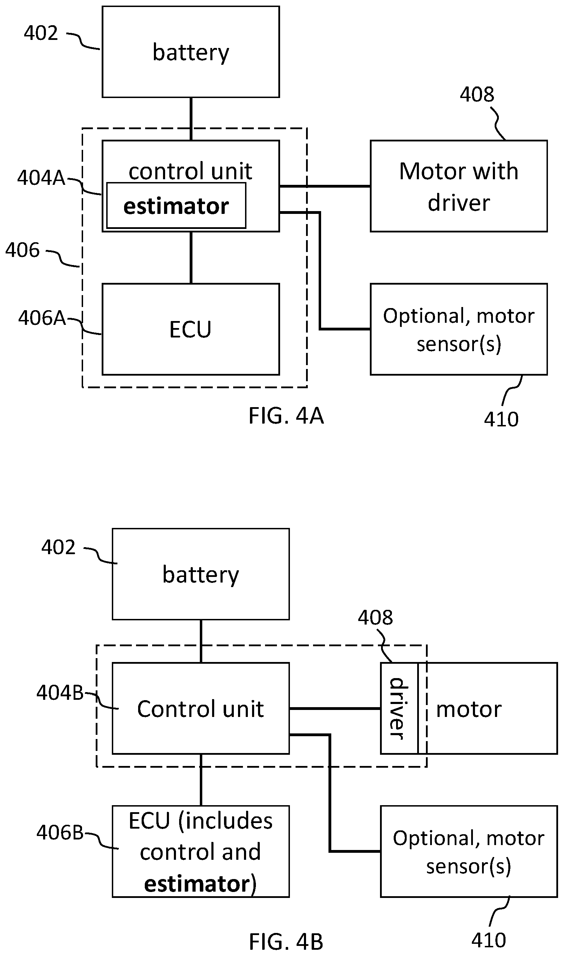

FIGS. 4A and 4B show two possible configurations of the controller 140 in a vehicle. Electrical power to the controller 140 may be supplied by an electrical power source, such as a battery 402, of the vehicle. The battery 402 may be a battery configured to provide power to an ECU 406 of the vehicle, and/or to other parts of the vehicle, for example, where the vehicle is an electric vehicle or hybrid vehicle, the battery 402 may also be configured to provide electrical power to the drive train of the electric or hybrid vehicle.

In the embodiment shown in FIG. 4A, the controller 140 may be in the form of a control unit 404A. The control unit 404A may be an electronic circuit having one or more electronic components. The control circuit 404A may include the estimator module. In some embodiments, the control unit 404A and the ECU 406A may be integrated as one single unit.

Alternatively, in the embodiment shown in FIG. 4B, a control circuit 404B may be a separate circuit that is operably connectable to an ECU 406B. In the alternative arrangement shown in FIG. 4B, the control circuit 404B may be a separate circuit, the separate circuit operably connectable with the ECU 406B. The ECU 406B may include the estimator module.

Each of the depicted control circuit 404A, 404B may be connected to a vehicle motor driver 408 of the suction device 110. The vehicle motor driver 408 may be configured to drive a motor of the vehicle to power the operation of the vehicle. In some embodiments, the vehicle motor driver 408 may also power the operation of the suction device 110, i.e. including the function of the motor driver 142.

In some embodiments as shown in FIG. 4B, the motor driver 408 may be integrated with the control unit 404B. The motor driver may be on the power side of the electrical circuit that controls the electrical part of the motor (e.g. the windings).

In some embodiments, the control units 404A, 404B may be operably connected to one or more motor sensors 410, each of the one or more motor sensors 410 be configured to receive motor sensor data 410 from the motor. Such motor sensor data 410 may include at least one of a motor temperature data, revolutions-per-minute (RPM) data, and speed/velocity data of the vehicle.

The control circuits 404A, 404B may be connected to the one or more sensors 160 to obtain brake-related data 162. The brake-related data may include at least one of a pre-braking data, a braking initialization data, and a braking operation data.

In some embodiments, the estimator module may run on ECU, the control unit or another on-board processing unit (not shown).

In some embodiments, computer memory may be distributed in one or more of the abovementioned components. Operably connectable may include the meaning of connectable via a vehicle's data communication bus, for example, a controller area network (CAN) bus.

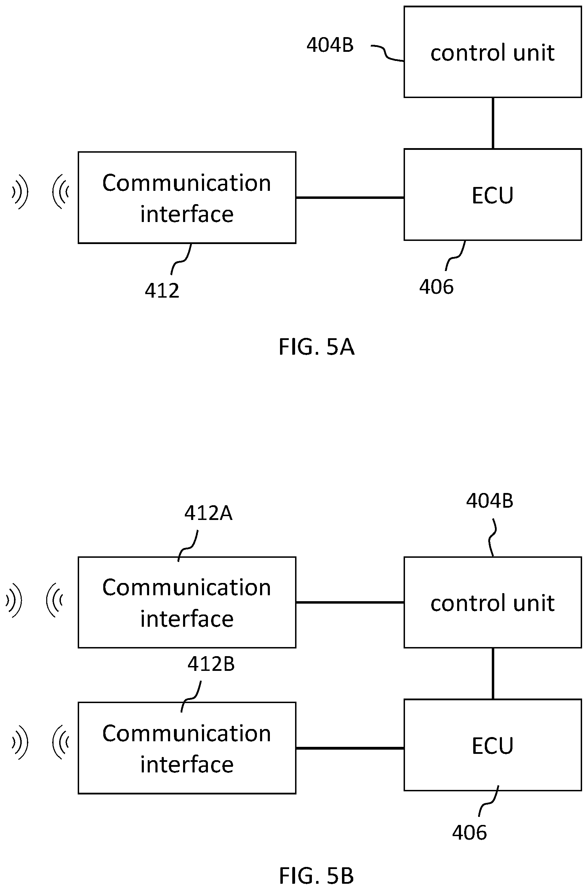

FIG. 5A and FIG. 5B show two configurations and arrangement of a communication interface. In some embodiments, the vehicle may have a central communication interface unit. In FIG. 5A, the ECU 406 is connected to an associated (or integral) communication interface. In FIG. 5B, the control unit 404B and the ECU 406 are each connected to a separate communication interface 412A and 412B respectively. The communication interface may include a pre-defined wireless communication protocol to receive the brake-related data 162 in the form of sensor data. Non-limiting examples of the pre-defined wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth, ZigBee, SigFox, LPWan, LoRaWan, GPRS, 3G, 4G, LTE, and 5G communication systems. In addition, or alternatively, the processor 150 may receive or obtain the brake-related data 162 via wired means. In some embodiments, the communication interface of FIG. 5A and/or Fig. 5B may be configured to exchange information with one or more other vehicles, i.e. vehicle-to-vehicle communication, such as direct vehicle-to-vehicle data connection. The vehicle-to-vehicle communication may enable the vehicle to wirelessly exchange data about the speed, locations, and direction of travel with other vehicles.

In some embodiments, the one or more sensors 160 may include one or more location sensors, one or more pressure sensors, one or more temperature sensors, one or more moisture/water sensors, one or more distance sensors, one or more particulate matter sensors, and/or one or more image sensors, for example, cameras. In some embodiments, the one or more sensors 160 may further include one or more modules to derive or calculate one or more parameters based on raw signals received by the one or more sensors 160. As an example of a distance sensor, a light detection and ranging (LiDAR) sensor may be used to emit laser light from a transmitter source and receive a reflected light from one or more objects the laser light is incident on. The reflected light is then detected by a receiver of the LiDAR sensor, and the reflected light signal, including a time of flight (TOF) parameter may then be used by the one or more modules within the LiDAR sensor to develop a distance map of the one or more objects.

As another example, a camera may be used to capture image data which may be further analyzed by an image processing module to determine the driving mode of the vehicle, whether the vehicle is in an express way driving mode, an urban driving mode, or a congestion driving mode.

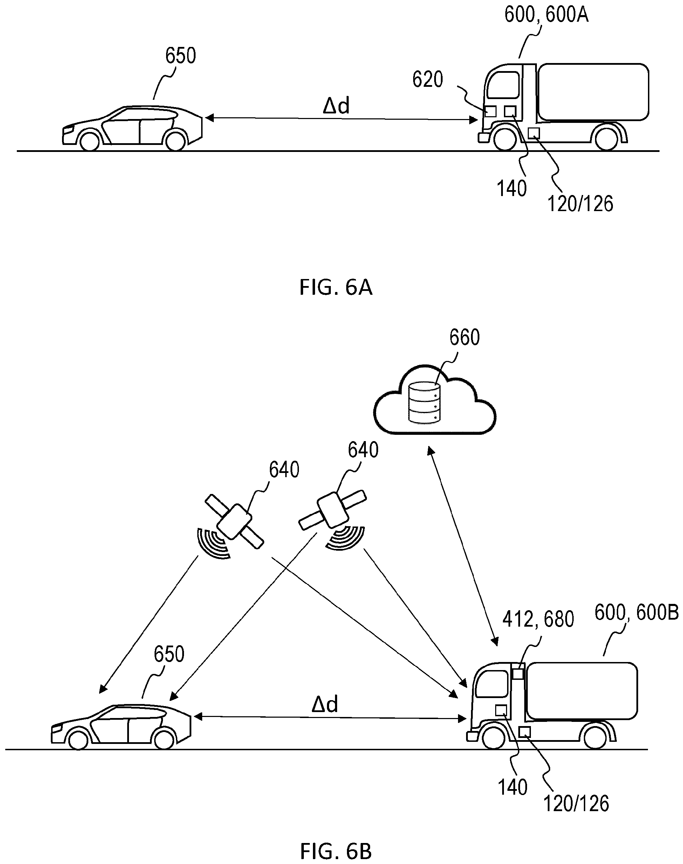

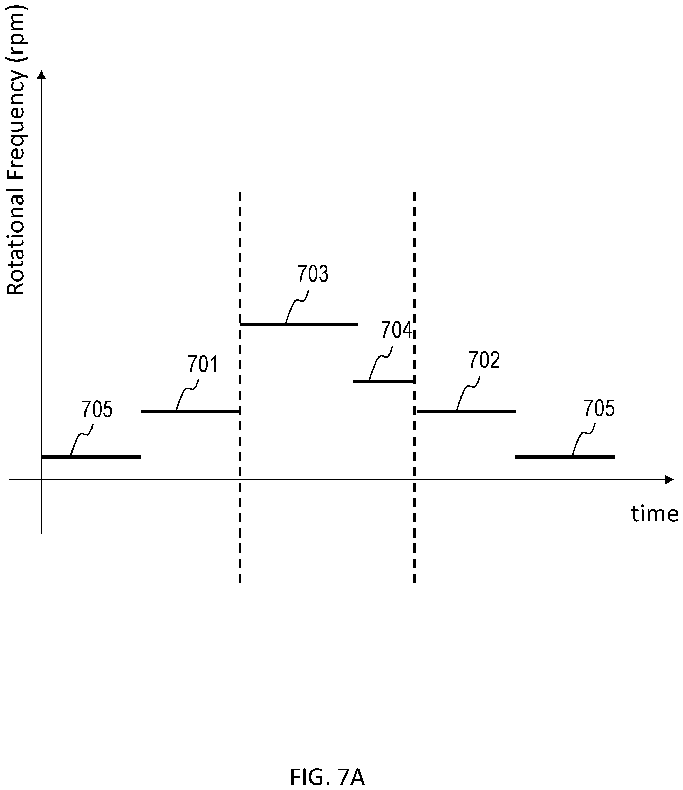

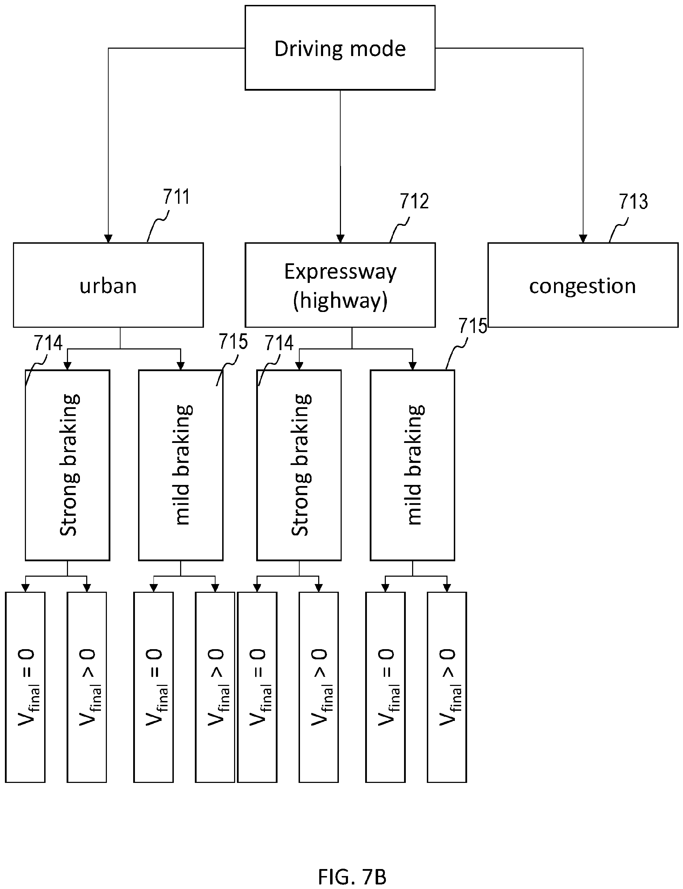

Embodiments of the obtained operation data used to determine the prognosis of braking events and select the control strategies to operate the suction device 110, which in turn operates the filter system 100, are described with reference to FIG. 6A, 6B and FIG. 7.

FIG. 6A shows a vehicle 600A comprising controller 140 configured to receive sensor data (operating data) from the one or more sensors 160 in the form of on-board sensors 620. The on-board sensors 620 may be used to determine, *inter alia,* a distance Δd between the vehicle 600A and another vehicle 650. The on-board sensors 620 may further comprise other sensors such as temperature, humidity, pressure sensors etc. to detect weather conditions and obtain weather data. The on-board sensors 620 may further include image sensors (e.g. cameras) to capture images surrounding the vehicle so as to provide an indication of the traffic conditions around the vehicle.

FIG. 6B shows another vehicle 600B comprising the controller 140 configured to receive, remotely, location data from location sensor(s) of the one or more sensors 160. The one or more sensors 160 may be in the form of a navigation system such as a global positioning system (GPS) system, the GPS system comprising a plurality of satellites 640 (usually 4 or more) and a receiver 680 (within the vehicle 600B). The receiver 680 may be part of the communication interface 412. The communication interface 412 may be arranged to remotely receive location data from the satellite 640 and historical or map data from the cloud server 660. The location data obtained from the location sensor(s) so as to determine the location of the vehicle 600B. The location data of the other vehicle 650 may also be obtained and may be transmitted to the vehicle 600B (subject to privacy constraints).

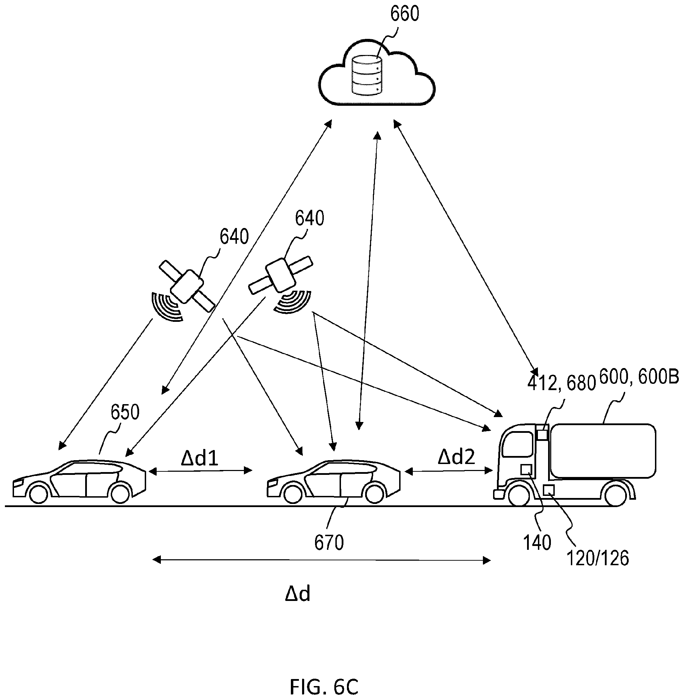

FIG. 6C shows another embodiment of the vehicle 600B in a convoy arrangement, with another vehicle 670 positioned between vehicle 600B and vehicle 650. Similar to FIG. 6B, the controller 140 may be configured to receive, remotely, location data from location sensor(s) of the one or more sensors 160. The communication interface 412 may be configured to remotely receive location data from the satellite 640 and historical or map data from the cloud server 660. In addition, the communication interface 412 may be configured to receive vehicle data from vehicle 670 via direct vehicle-to-vehicle connection or communication. The location data obtained from the location sensor(s), in addition to the data received from vehicle 670, may be used to obtain/determine a distance Δd2 between the vehicle 600B and vehicle 670, a distance Δd1 between the vehicle 650 and vehicle 670. The obtained distance parameters Δd2 and Δd1 may be used to derive the distance Δd parameter, i.e. the distance between the vehicle 600B and vehicle 650.

It is contemplated that the embodiments of FIG. 6A, 6B and 6C may be combined, that is, the vehicle 600A and 600B may be the same vehicle 600 comprising on-board sensors 620 and comprising communication interface 412 to receive sensor data from remote sources. Particularly, the on-board sensors 620 may be configured to receive braking data of the vehicle 600 over a period of time. The braking data may include the number of activations and releases of a braking lever of the vehicle, and the braking torque associated with the activations (i.e. translatable to mild braking or hard braking events).

In some embodiments, the embodiments of FIG. 6A and 6B, particularly the one or more sensors 160, may include one or more particulate matter sensors, and one or more tire pressure sensors, may be used to determine if the vehicle 600 is operating in various driving modes, such as an urban road driving mode, a highway or express way driving mode, a congestion driving mode, an off-road driving mode, a race-driving mode, etc.

FIG. 7A illustrates the various operation states of the suction device 110 using a graph of rotational frequency (in revolutions per minute) of a motor of the suction device 110 vs. time. The graph may be used to illustrate a pre-conditioning state 701, an idle state 702, a full operation state 703, a post-conditioning state 704, and a rest state 705. A control strategy may comprise a combination of two or more of the operation states, each operation state may operate for a specific duration.

The pre-conditioning state 701 may include a pre-conditioning of the suction device 110 to prepare the suction device 110 for filtering brake dust particles generated by the one or more braking devices 200 during braking events. In some embodiments, the pre-conditioning state may be associated with the motor of the suction device 110 being switched on in anticipation of a full operation suction power corresponding to different braking events.

In some embodiments, the pre-conditioning state may correspond to an increasing blower frequency from a rest frequency (e.g., from zero, or 5000 rpm) to an intermediate frequency, the intermediate frequency may be chosen between one-fifth and a half of a pre-determined maximum frequency. For example, the intermediate frequency may be chosen between 15 000 rpm and 40 000 rpm, or from 15 000 rpm to 40 000 rpm, where there is either a pre-determined probability of a future braking event occurring within a pre-determined time period, and/or a braking event initialization has been detected via, for example, movement of a braking pedal. In certain conditions, for example, if the vehicle is on an expressway and a braking event happens relatively quickly, the pre-conditioning state may be switched to a full operation state 703 quickly, due to a relatively high probability of a serious braking event.

In some embodiments, the pre-conditioning state 701 may be determined based on a plurality of the likelihood of one or more changes indicating that a relatively high likelihood of braking event(s) may be happening. For example, a forecast traffic jam based on a map information service, a sudden decrease of vehicle speed or velocity, etc. In some embodiments, the pre-conditioning state 711 may correspond to a positive signal indicating the vehicle will enter into a braking state/event within a pre-determined period.

The idle state 702 corresponds to a state where the suction device 110 operates at an idle intensity, i.e. at a revolution per minute (rpm) greater than zero, in anticipation to increase the rpm to the full operation state 703 in case of a brake event. The idle intensity (in rpm) may vary, for example, according to different driving modes and/or traffic conditions. In some embodiments, the idle state 702 may correspond with a resting or cooling state of the motor of the suction device 110 between successive braking events. In some embodiments, the idle state 742 may correspond to a state of cooling or a "default state" between successive braking events.

The full operation state 703 may be associated with a nominal full operation intensity of blower, i.e. a pre-determined rpm (or delivered power) that is used in blower control during an active filtration associated with a brake event. The nominal full operation intensity of blower may be set differently for different control strategies of the filtration system.

The post-conditioning state 704 corresponds with a blower frequency (in rpm) at a level higher than the idle state 702 or higher than zero (depending on the embodiment), for a pre-determined post-conditioning time, after a braking event associated with the full operation state 703 has ended. The post-conditioning state 704 may allow for faster response time if another braking event occurs within a pre-determined post-conditioning time. This may also allow for cooling of the blower due to a decreased blower frequency relative to the full operation state 703. In some embodiments, the post-conditioning state 704 is after the brake dust filtering time window, where the generated airflow 112 can be used to cool the blower, and off-brake emissions can be reduced. Off-brake emissions may correspond with emissions coming from a brake system when rotations of a rotating system/portion of the brake system (e.g. the frictional brake disc) is accelerated and the particles are sucked by an under-pressure of the rotating system/portion.

The rest state 705 may correspond to a state when the suction device 110 is started up and is comparatively lower in rpm compared to other states.

In some embodiments, some states may be merged. For example, the idle state and the post-conditioning state and/or the pre-conditioning state may be merged and may be implemented as a same state.

It is appreciable that although the FIG. 7A depicts abrupt changes in rpm between the different states, the actual changes in rpm between states may be in accordance with a slope based on a pre-determined change in rpm over time as the motor and blower require time to respond to a control data to decrease or increase the rpm. It is contemplated the full operation state 703 may extend until after a braking lever starts to be released by a driver of the vehicle 600, or it may end and merge into the post-processing state 704 when the brake starts to being released.

Although FIG. 7A depicts the different operation states to be at a relatively constant rpm, it is appreciable the rpm of the suction device may, in real life, fluctuate within a state and in some embodiments, may be adaptative depending on changes of the control data.

With reference to FIG. 7B, there may comprise different driving modes depending on the driving modes of the vehicle 600. Driving mode means the mode that vehicle is driving, and the mode may depend and be estimated based on the traffic conditions. Non-limiting examples include urban 711, express way 712, and congestion 713.

The traffic conditions may in turn be determined or classified based on speed/velocity of the vehicle, frequency of braking, images captured from the environment of the vehicle 600. Each of the aforementioned driving mode may further comprise different braking events of the vehicle 600. These events may include a strong braking event 714, wherein the velocity of the vehicle may come to a complete stop after the one or more brakes are applied - final velocity V_{final} of the vehicle is zero, or a mild braking event 715 wherein the vehicle 600 slows down after the one or more brakes are applied but does not come to a complete stop - final velocity V_{final} of the vehicle is greater than zero.

It is appreciable for a mild braking event 715, the nominal full operation intensity (see FIG. 7A) may be lower than for strong braking event 714. The operation intensity of blower may vary for different filtration system operating modes, for example, for mild braking the nominal full operation intensity may be lower than for strong braking. In examples, strong braking may have a higher pre-determined torque and/or higher pre-determined torque gradient than the mild braking.

In some embodiments, the estimator module may be configured to estimate the probability of a braking event occurring within a pre-determined time (e.g., in the next 10 seconds). The control strategy in response to the braking event may be implemented at a multi-level, for example, within 1 minute (min), maintain in an idle operation state, within 10 seconds (secs), set to a pre-conditioning operation state.

In some embodiments, the estimator module may estimate a time parameter for the occurrence of a next braking event. The occurrence of a next braking event may include a corresponding probability (P) of occurrence, for example, a dataset comprising probability and time (t) may be obtained as follows [[P=1,t=10], [P=1, t=9] [P=0.5, t= 8], [P=0, t=7], [P=0, t=6], [P=0, t=5]...[P=0,t=1]]. Based on the obtained dataset, the estimator can then set a threshold, e.g., at t=6, is P>P_th).

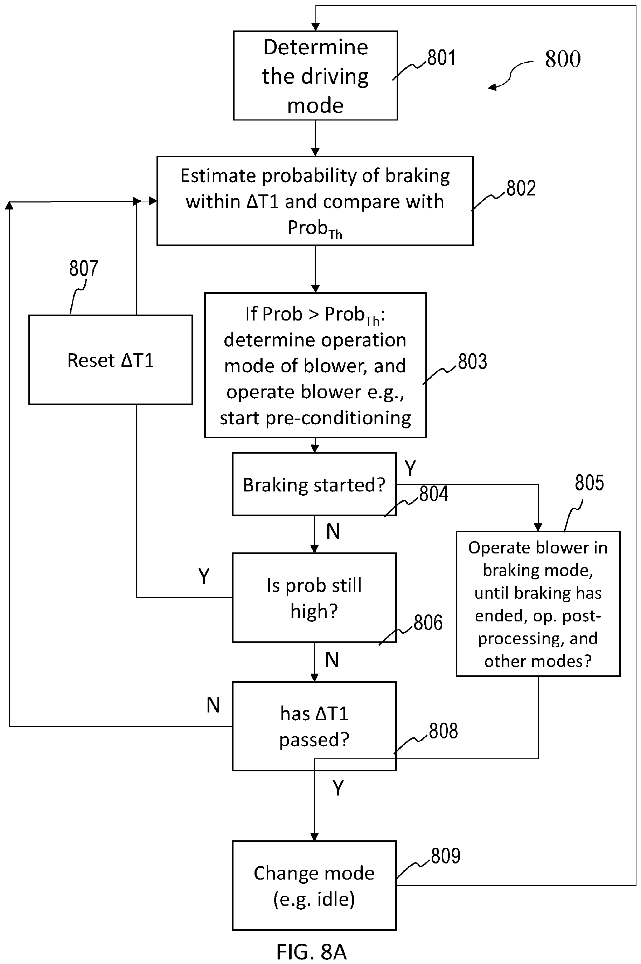

FIG. 8A shows a flow chart depicting a method 800 for determining one or more control strategies (also referred to as filter operation modes or operation states) of the suction device 110 of the filter system 100. The method 800 may be executed by the processor 150 while the vehicle is operating.

In 801, the driving mode of the vehicle is determined. This may be based on the on-board sensors 620 and/or the communication interface 412 may be arranged to remotely receive location data from the satellite 640 and historical or map data from the cloud server 660.

In 802, the probability of braking the vehicle within a pre-determined time ΔT1 is estimated and compared with a probability threshold Prob_{Th}

In 803, in a positive determination that the probability is greater than Prob_{Th}, the operation state of the suction device (blower) is determined and the blower is operated based on the operation state (e.g. pre-conditioning state 701).

In 804, the method 800 continues to monitor for braking event(s) based on, for example, periodic brake pedal/level signals sent.

In 805, in a positive determination that a braking event has started, the blower may be operated in a full operation state 703, while detecting whether the braking event(s) has ended. Upon determination that the braking has ended, the operation state of the suction device may be switched to a post-conditioning state 704, an idle state 702, or a rest state 705 in accordance with 820.

In 806, in a negative determination that the braking has started, the method 800 continues to monitor if the probability is still greater than the threshold Prob_{Th}.

In 807, in a positive determination that the probability is greater than the threshold Prob_{Th}, the pre-determined time ΔT1 is reset.

In 808, in a negative determination that the probability is greater than the threshold Prob_{Th}, the elapsing of the pre-determined time ΔT1 is checked.

In 809, in a positive determination that the pre-determined time ΔT1 has elapsed, the filter operation mode is changed. Otherwise, the method 800 loops to 804 to re-estimate the probability of braking.

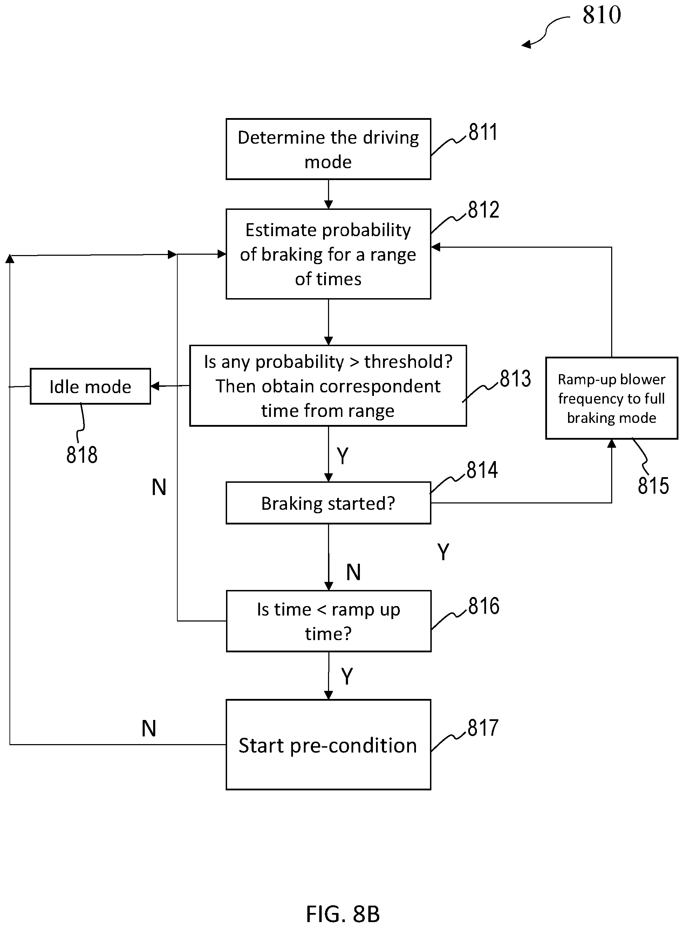

FIG. 8B shows another flow chart depicting a method 810 for determining an operation state (also referred to as filter operation mode) of the suction device 110 of the filter system 100. The method 810 may be executed by the processor 150 while the vehicle is operating.

In 811, the driving mode of the vehicle is determined. Similar to 801, This may be based on the on-board sensors 620 and/or the communication interface 412 may be arranged to remotely receive location data from the satellite 640 and historical or map data from the cloud server 660.

In 812, the probability of braking within a range of time may be estimated. In some embodiments, this may comprise one or more of the following: a probability estimate of the braking event after a previous braking event (a first probability estimate), a probability estimate of the braking event occurring within a pre-determined time period (a second probability estimate), or a probability estimate of a next braking event after the braking event (a third probability estimate).

In 813, each of the probability estimate obtained within the range of time is compared with a threshold, and the corresponding time parameter associated with the probability estimate is obtained. The threshold may be dynamically calculated or determined, for example, based on a speed and/or the inter vehicle distance.

In 814, in a positive determination that the probability estimate is greater than the threshold, the method 800 continues to monitor for braking event(s) based on, for example, periodic brake pedal/level signals sent.

In 815, in a positive determination that a braking event has started, the blower may be operated to increase the rpm within a time frame ("ramp up") to a full operation state 703, while estimating the probability of the next braking event (loop back to 812 or alternatively to 811).

In 816, in a negative determination that the braking has started, the method 810 monitors if the time parameter is less than a ramp up time.

In 817, in a positive determination that the time parameter is less than the ramp-up time, the operation state of the suction device is set to a pre-conditioning state.

In 818, in a negative determination that the probability estimate is greater than the threshold, the operation state of the suction device 110 is set to an idle state.

In some embodiments, in a negative determination associated with 816 and 817, the determination of the driving mode may be restarted (loop back to 811). In some embodiments, after the blower rpm is increased in 815, the determination of the driving mode may be restarted (loop back to 811). In some embodiments, one or more processes, for example 814 may be executed as a parallel task with respect to any oneof 811, 812, or 813.

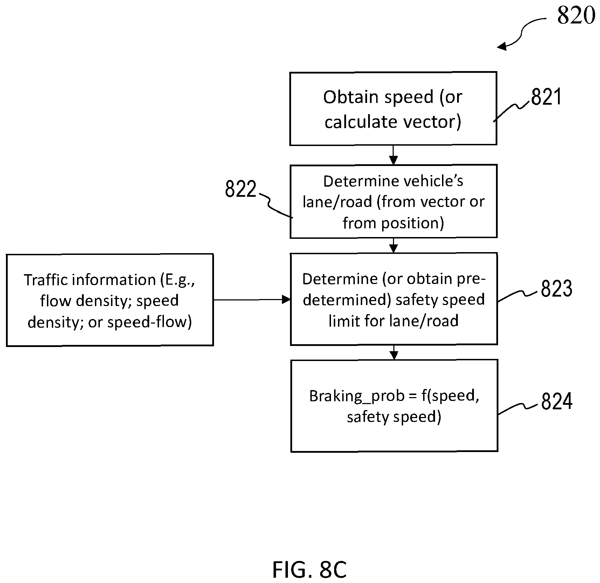

FIG. 8C is an exemplary flow chart of a method 820 for estimating a probability of braking within a pre-determined time ΔT1. The method 820 may be used in steps 802 and 812 of the methods 800 and 810.

In 821, the speed of the vehicle is obtained. The speed may be used to derive related parameters such as velocity (based on vector calculation), acceleration or deceleration.

In 822, the vehicle intended travel direction (which may include a lane or a road) is determined based on vector calculation and/or location data.

In 823, the safety speed limit for the lane/road may be obtained or determined. This may be obtained using remote traffic information database. The speed obtained in 821 may be used to determine traffic information such as flow density, speed density, and/or speed-flow.

In 824, the probability of a braking event P_{brake} occurring may be calculated based on a function of the speed and the safety speed limit., i.e. P_{brake} = f(speed, safety speed limit). In some embodiments, if the speed determined in 821 is higher than the safety speed limit, the probability will be assigned to 1 or near 1, indicating a very likely probability of braking. It is appreciable that P_{brake} may include other variables such as distance with another vehicle, i.e. see distance Δd between vehicle 600A/600B and vehicle 650 in FIGS. 6A and 6B. If the distance Δd is smaller than a distance threshold, the probability of braking is assigned to 1 or near 1.

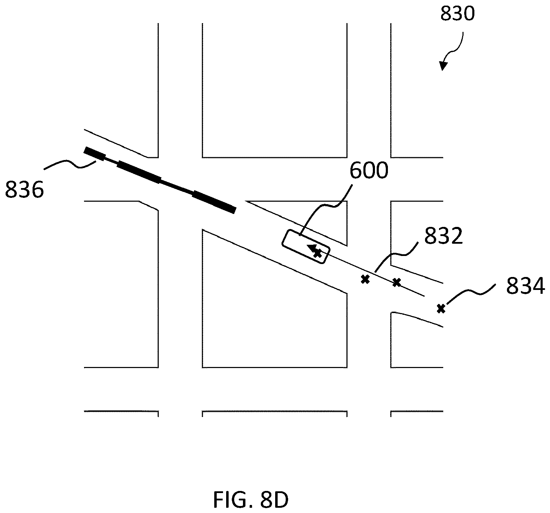

FIG. 8D is an illustration of an operation data, in the form of a traffic information 830, used in the some embodiments for determining a probability of braking. The traffic information may be obtained from map data. In the illustration, the vehicle 600 may be travelling on an intended direction defined by a road, with the vector 832 determined (using interpolation and/or extrapolation) based on GPS data points 834 obtained over a number of positions or over a pre-determined time period of the moving vehicle 600. The traffic flow information 836 may be indicative of objects and/or other vehicles 650 along the same intended direction defined by the vector 832, and may provide information such as flow density, speed density, and/or speed flow. Traffic flow information 836 indicating congestion may mean a high likelihood of braking, i.e. P_{brake} assigned to 1 or near 1. It

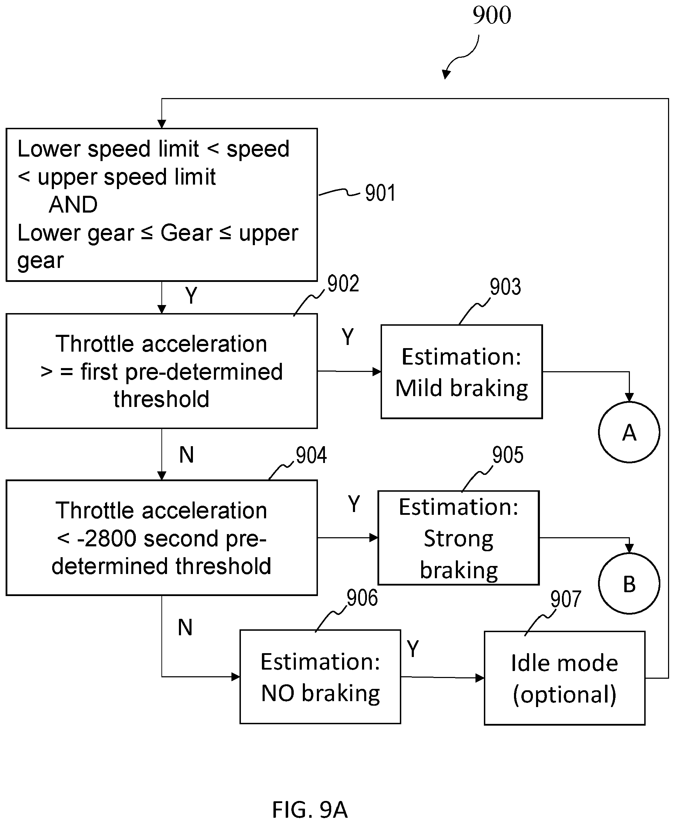

FIG. 9A is a flow chart depicting a method 900 for determining a driving mode of a vehicle and the corresponding braking type. The method 900 may be applicable for an urban driving mode and an express way/highway driving mode.

In 901, the speed data and the gear data of the vehicle are obtained. If the speed is maintained at a speed between a lower limit and an upper limit, for example between 20 kilometers/hour (km/h) and 70 km/h, and the vehicle gear is at for example gear 3, for a pre-determined period of time, the vehicle may be determined to be operating in an urban mode. If the speed is maintained at above the upper limit, e.g., above 60 or 70 km/h and the gear is 4 and above for the pre-determined period, the vehicle may be determined to be operating in an express way/ highway driving mode.

In 902, if a negative throttle acceleration (i.e. a deceleration) of the vehicle is above a first pre-determined threshold, e.g. ≥ -2,800 Throttle body injection (Tb),

In 903, in a positive determination based on 902, a mild braking type is estimated (903).

In 904, in a negative determination based on 902, and in a positive determination that the deceleration is below a second pre-determined threshold, e.g. < -2 800 Nm/s, a strong braking type is estimated (905).

In 906, in a negative determination based on that the braking intensity is below the second pre-determined threshold, no braking type is estimated or determined.

In 907, the operation state of the suction device 110 may be set to an idle operation state.

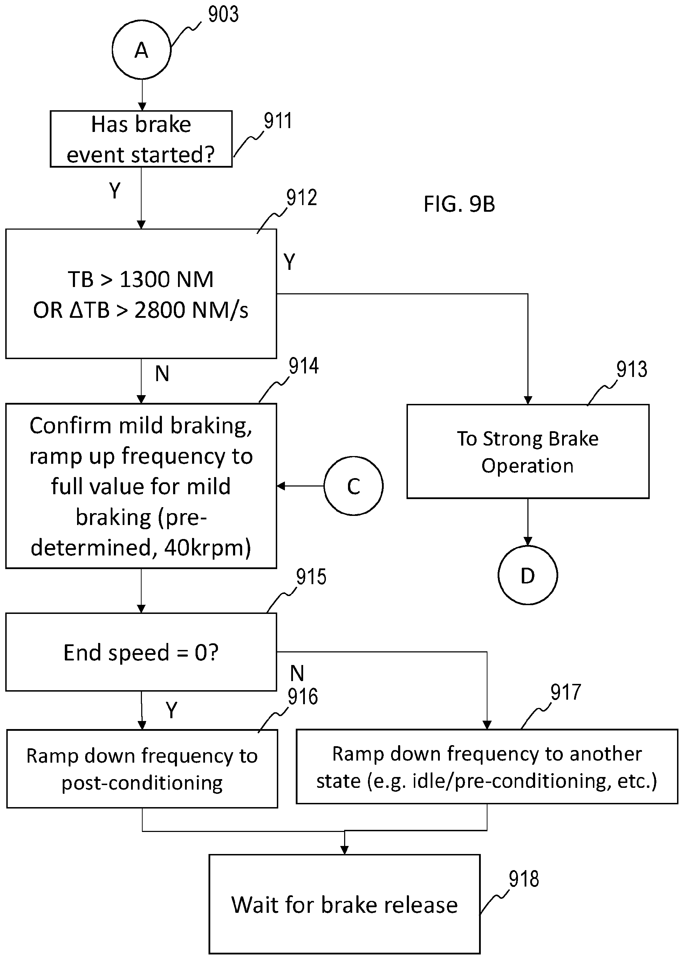

FIG. 9B shows the process after the estimation of a mild braking event in 903.

In 911, the method 900 monitors the braking event and whether the braking has started.

In 912, upon a positive determination that the braking event has started, the braking torque is compared with a torque threshold to determine whether the torque threshold Tb is exceeded, for example, Tb > 1300 Nm, or a change in braking torque threshold per second is exceeded, for example, ΔTb > 2800 Nm/s.

In 913, a strong braking operation is determined in a positive determination that the torque threshold is exceeded or the change in torque threshold is exceeded.

In 914, in a negative determination that the braking torque is greater than the torque threshold and the change in torque threshold (e.g. 2800 Nm/s), a mild braking operation is determined. The operation state of the suction device may be set to the full operation state 703. The mild braking may correspond with a pre-determined frequency of 40 000 rpm.

In 915, the method 900 checks if the final speed is zero (i.e. final speed = 0)

In 916, in a positive determination that the final speed is zero, the suction device 110 is set to a post-conditioning state, this may correspond to a ramp-down of operating frequency (see FIG. 7A).

In 917, in a negative determination that the final speed is zero, the suction device 110 may be set to another state such as an idle state 701, or any other operation states between the full operation state 703 and the post-conditioning state 704.

In 918, the method 900 monitors for the brake to be released, i.e. an end of the braking event. This may correspond to setting the operation state of the suction device 110 to the idle state, the pre-conditioning state (in anticipation of another braking event within a pre-determined time), and any other operation states.

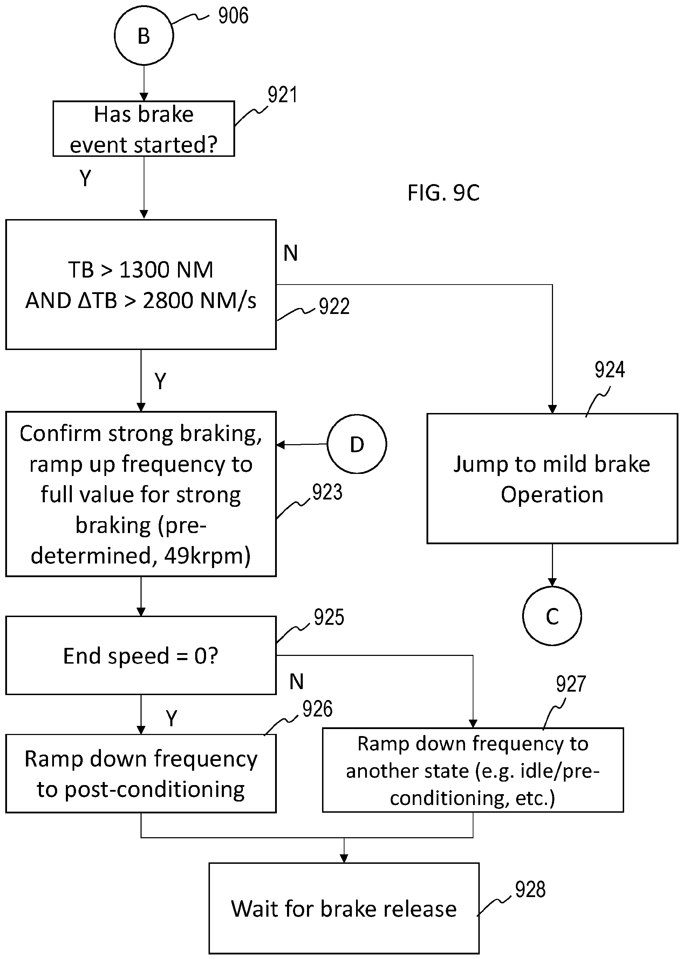

FIG. 9C shows the process after the estimation of a strong braking event in 906.

In 921, the method 900 monitors the braking event and whether the braking has started.

In 922, upon a positive determination that the braking event has started, the braking torque is compared with a torque threshold to determine whether the torque threshold Tb is exceeded, for example, Tb> 1300 Nm, and a change in braking torque threshold per second is exceeded, for example, ΔTb > 2800 Nm/s.

In 923, upon a positive determination that the torque threshold Tb is exceeded, and a change in braking torque threshold per second ΔTb is exceeded, the strong braking event is confirmed. The suction device 110 is then set to a full operation state corresponding to the strong braking event. In some embodiments, the blower may be set to a pre-determined frequency at 49 000 rpm.

In 924, upon a negative determination that the torque threshold Tb is exceeded, or a change in braking torque threshold per second ΔTb is exceeded, a mild brake event is concluded instead of the strong braking event as originally estimated. The method may then proceed with the mild braking step 914.

In 925, the method 900 checks if the final speed is zero (i.e. final speed = 0)

In 926, in a positive determination that the final speed is zero, the suction device 110 may be set to a post-conditioning state 704, this may correspond to a ramp-down of operating frequency (see FIG. 7A) from the full operation state 703.

In 927, in a negative determination that the final speed is zero, i.e. the final speed is not-zero, the suction device 110 may be set to another state such as an idle state 701, or any other operation states between the full operation state 703 and the post-conditioning state 704.

In 928, the method 900 monitors for the brake to be released, i.e. an end of the braking event. This may correspond to setting the operation state of the suction device 110 to the idle state, the pre-conditioning state (in anticipation of another braking event within a pre-determined time), and any other operation states.

It is to be appreciated that the embodiments described in FIGS. 9A to 9C may be applied to the urban driving mode and the express way/ highway driving mode. However, the various thresholds used for comparison and determination of mild braking and strong braking may vary depending on the driving mode.

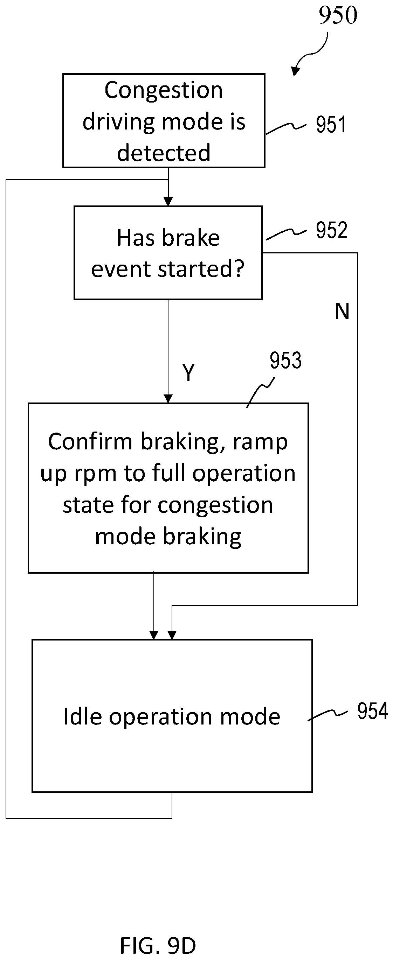

FIG. 9D is a flow chart depicting a method 950 for determining a congestion driving mode of a vehicle and the corresponding braking type.

In 951, the congestion driving mode may be detected based on traffic information 830, particularly the traffic flow information 836 as illustrated in FIG. 8D. Alternatively or in addition, the traffic information 830 may be supplemented using image data, location data, and/or distance measurements obtained from distance sensors.

In 952, the method 950 monitors the braking event and whether the braking has started.

In 953, upon a positive determination that the brake event has started, the rpm of the blower of the suction device 110 is increased or ramped up to a full operation state 703. The rpm of the full operation state associated with the congestion driving mode may be different from the urban driving mode and/or the express way/highway driving mode. In some embodiments, the rpm may be 20,000 rpm.

In 954, upon a negative determination that the brake event has started, or after the braking event has been completed/ended, the blower of the suction device 110 may be set to an idle operation state.

In some embodiments, the distance Δd between the vehicles (see FIG. 6A and 6B, for example), also referred as distance to vehicle in front (or inter-vehicle distance) may be used for estimating the probability of a braking event. For example, the distance may be compared against a stopping distance, which may depend on the vehicle speed, and may further depend on other factors, such as road surface/pavement conditions (e.g., distance may increase when there is rain, snow or ice due to reduction in friction on the road).

In some embodiments, a parameter referred to as a matching braking distance may be used for estimating the probability of the braking event. The matching braking distance refers to a distance necessary for a vehicle to, at full braking, reduce the speed until the speed is substantially identical to the vehicle in front, added to the stopping distance. As an example, if the matching braking distance, or optionally the matching braking distance added to a pre-determined tolerance value, is higher than a current inter-vehicle distance, then there the probability of braking is high, e.g., indication that braking is highly likely, for example, set to 1 or near to 1, in a normalized 0 to 1 range. In an exemplary scenario, a vehicle on a highway having a relatively higher speed may approach another vehicle on the highway having a relatively lower speed, and such a scenario may indicate that braking is needed and hence the probability of braking is high. If a distance allows, the braking may not result in the vehicle of relatively higher speed to come to a stop but to a matching speed of the vehicle with the relatively lower speed.

In some embodiments, a distance warning sensor data, such as a collision warning sensor, which may include one, or a combination of, the above listed sensors, may be configured to provide warning data in the form of an alert (ON or OFF), wherein when it is ON then the probability of braking may be higher, e.g., maximized (e.g., set to 1 or near 1, in a normalized 0 to 1 range). As an alternative to a binary on/off, the warning data may be expressed in other form, for example trinary, such as, no warning, warning, collision imminent, or it may be a range (e.g., encoded in 8 or 16 bits). The probability of braking calculation could be based on such data, e.g., in a simple case, it could be a transfer function (in one example from trinary to binary: [0;0.5;1] mapped to/associated with [0;1;1]. The trinary symbols can be implemented in other forms and computer data types, and notation could be binary, such as [00,01,10]. In another example, the probability of braking may be more than binary, e.g., at least trinary, whereas at 0 the blower remains unchanged (e.g., in idle, or zero), and at above 0.5, the blower enters in pre-conditioning mode, and at above 0.9 to 1 (or at 1) the blower goes into full braking frequency.

A location/position of the vehicle may be matched against a navigation map data. For example, the position of the vehicles in coordinates form may be obtained from a GPS system, and the navigation map data may be obtained remotely as an "overlay". The navigation map data may contain static and/or dynamic information on safety speed limits. The vehicle's speed and derived vector (i.e. velocity) may then be compared to the information on speed limits for said position. When the vehicle's speed is above safety speed limit, then the risk of braking may increase, the risk of braking may be a function (e.g., linear, quadratic, or a fitting on experimental data) of the excess speed. The navigation map data may have static speed information that is historically associated with the specific road and position, such data may include further dimensions, such as, time of the day. In some examples, the static data may be updated regularly, e.g., once a day, once a week, once a month, or once a year. The navigation map data may have dynamic speed information which is adapted to the current pavement, traffic conditions, road work. For example, if the traffic density ahead is high, then the safety speed limit may be recalculated and reduced. The aforementioned derivation of speed limit and update of navigation map may be associated with the calculation or re-calculation of safety speed limit on a vehicle's intended path of travel in 823 and 824.

In summary, the operation data 161, which includes the brake-related data 162, may be used to estimate the probability of an impending braking event or a braking event occurring within a pre-determined time frame. The probability may further include a probability of a braking event happening after a previous braking event (i.e. based on recalculating of braking event based on the driving mode of the vehicle and the type of braking, for example, hard braking or mild braking).

The probability estimate may be used to determine the operation state of the suction device 110. For example, when the processor 150 receives brake-related data 162 related to a distance with respect to another vehicle in front of the vehicle, and the distance is smaller than a first pre-determined distance threshold, the operation state of the suction device 110 may be set to a pre-conditioning state or a full operation state.

In some embodiments, the environment the vehicle is operating in and/or the road or surface(s) the vehicle is operating in may be used to determine the usage of the vehicle and to enable or disable the suction device 110, i.e. determine whether the suction device 110 may be switched on/off. This is to be distinguished from the various operation states as depicted in FIG. 7A. In particular, the rest state 705 depicted in FIG. 7A is not to be confused with a disable suction device state, which corresponds to the suction device not in operation and optionally shielded from adverse environmental/driving conditions to protect the filter element 120. Examples of such adverse environmental/driving conditions are off-road driving mode, race-driving mode, adverse weather or environmental pollution.

In some embodiments, the sensors 160 may further include environmental data with at least one of a weather data and an environmental pollution data. The one or more sensors 160 may include hardware sensors, software sensors, or various combinations of hardware and software sensors.

In some embodiments, the one or more sensors 160 may be on-board the vehicle. In some embodiments, the one or more sensors 160 may include remote sensor(s). In some embodiments, the processor 150 may be configured to extract data from established sources such as weather data, satellite data, map data, etc.

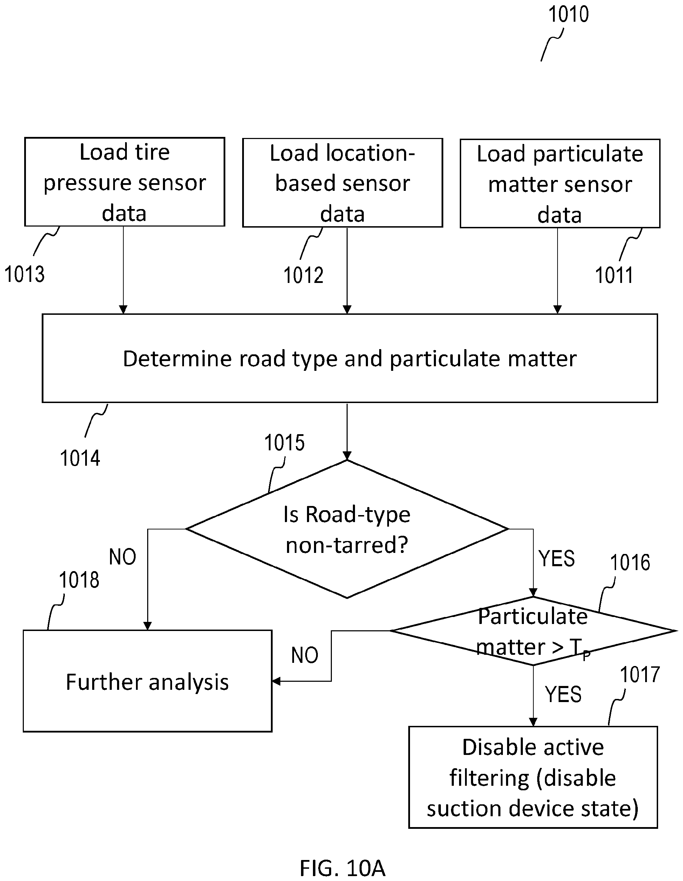

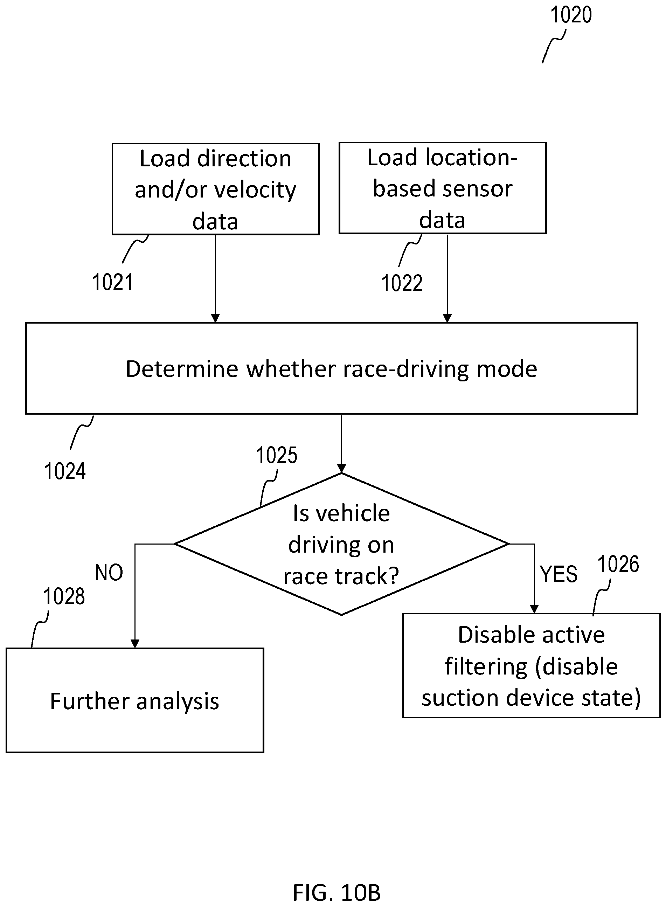

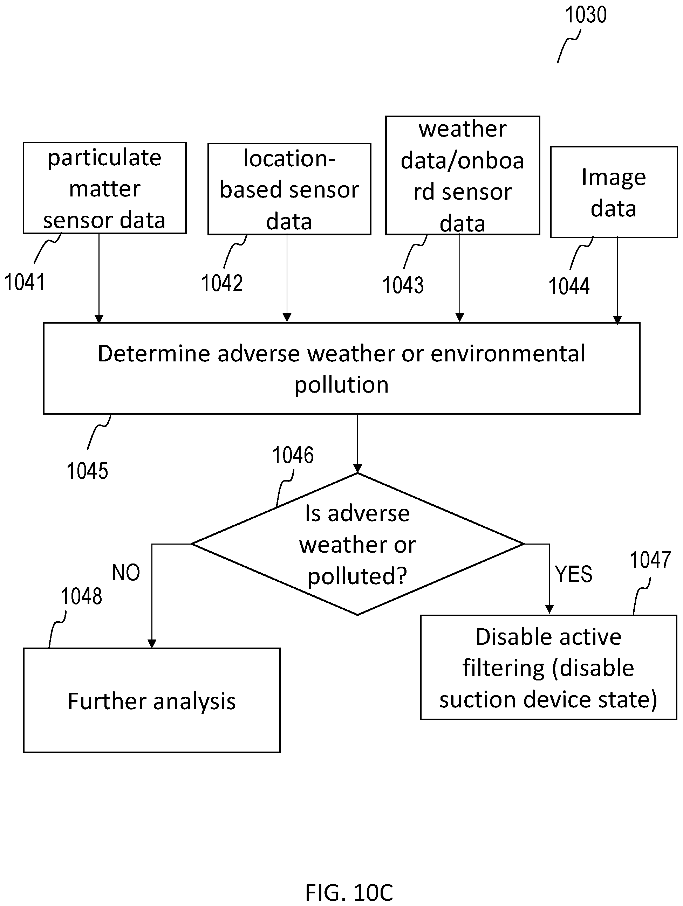

FIG. 10 shows an exemplary flow chart/diagram of a method 1010 for determining an off-road driving mode based on using particulate matter sensor data 1011, using location data 1012, and using at least one tire pressure sensor data 813.

The off-road driving mode may be described as the vehicle 600 operating on a non-paved road or not on a road at all, for example, vehicle operating on dirt tracks. The off-road driving mode is to be contrasted with a falling off a road event.

The off-road driving mode may be detected by using the location sensor(s) 160, for example, an in-built navigation system within the vehicle 600 or on a smartphone device of a user of the vehicle. The obtained location data 1012 may be in the form of GPS data. The term GPS as used herein and in accordance with various embodiments may mean the US global positioning system, or any other equivalent systems, such as Galileo, Beidou, GLONASS, and may include suitable coordinates depending on the specific GPS system used. The GPS data may be accompanied with a map data of a region or area within a certain pre-defined radius of the vehicle location based on the GPS coordinates. In some embodiments, the location sensor of the vehicle may, by obtaining position coordinates (such as GPS), determine by geographical location that the vehicle is not on a paved road. In some embodiments, the determination of the location may be performed remote to the vehicle, for example, in a remote cloud server. The GPS data may then be processed by the location sensor module to obtain a driving vector or driving segment, with a pre-determined degree of certainty, matching the driving vector or driving segment to a remotely accessible map comprising information on paved roads and regions that are not paved roads. (e.g., via cloud server or database 660), and determining whether the driving vector or driving segment is a paved road, and if determined that not, then the vehicle is determined to be driving off-road.

In addition to the GPS data, particulate matter sensor data 1011, and/or the pressure sensor data 1013, may be used to determine the road type using a road type and environment analysis module 1014. In some embodiments, one or more particulate matter sensors may be configured to detect the outdoor air quality and can be used to measure the particle concentration of the environmental air, and if the particle concentration is above a pre-determined threshold T_{P}, then the suction device 110, and therefore the active brake dust filter, may be disabled.

The road type and environment analysis module 1014 may form part of the processor 150. The road analysis module 1014 may be used to determine if the vehicle 600 is on a tarred road, and whether the dust load in the air surrounding the wheel is determined to be high, that is, higher than a pre-determined threshold concentration.

In summary, if it is determined that the road type is off-road based on decision logic 815 and the particulate matter is greater than a pre-determined concentration Tₚ based on decision logic 1016, the operation state of the active brake dust particle filter, that is, the suction device 110 is set to a disable suction device state.

In some embodiments associated with the disable suction device operation state, the speed of the suction device 110 may be reduced or the suction device 110 can be switched off to protect the filter system and its components. Additionally, an off-road system in the vehicle, such as a limited slip differential or downhill module can be used to adjust the control strategy of the active brake dust particle filter system via the suction device 110.

In some embodiments, if the road-type is determined to be tarred based on decision logic 1015 or is the particulate matter in the air surrounding one or more wheels of the vehicle 600 is determined to be less than the pre-determined concentration T_{P}, further analysis 1018 is required to determine the operation state of the active brake dust particle filter and the suction device 110.

FIG. 10B shows an exemplary flow diagram/flow chart of a method 1020 for determining a race-driving mode based on particulate matter sensor data 1011, and location sensor data 1022.

A race-driving mode may be described as a vehicle 600 operating on a race track. Race tracks may be separated from populated or urban areas, and therefore pollution control may not be critical. In addition, electrical power may be saved for driving the vehicle 600 instead of using it for filtration. On race tracks, the active brake dust particle filter can be disabled via setting the operation state of the suction device 110 to disable suction device operation state if needed.

The race track may also be detected by location sensors. In some embodiments, the location sensor data 1022, such as GPS data of the vehicle may be collected and used to determine if the vehicle 600 is operating in the race-driving mode.

In some embodiments, a process or method for determining whether the vehicle 600 is on a race track may include steps for obtaining position coordinates (such as GPS data) and direction and/or velocity data of the vehicle; processing the GPS data by a race-track driving mode determination module 1024 to obtain a driving vector or driving segment, with a pre-determined degree of certainty; matching the driving vector or driving segment to a map comprising information of the race track position (e.g., from a geographical map server); and determining whether the driving vector or driving segment is on a race track (decision logic 1025), and if determined that the driving vector or driving segment is on a race track (decision logic 1026), then the driving mode of the vehicle is determined as a race-driving mode.

In some embodiments, in addition to using the location sensor data 1022, a direction data and/or velocity data 1021 of the vehicle 600 may be analyzed by the race-track driving mode determination module 1024 for repeated cycles of the vehicle around the race-track, and if such repeated cycles are found, the vehicle 600 may be confirmed to be in the race-driving mode.

Upon determination that the vehicle is in the race-track driving mode, the operation state of the active brake dust particle filter, that is, the suction device 110 is set to a disable suction device state.

In some embodiments, in the case the vehicle 600 is determined not to be in the race-driving mode based on either the location sensor data 1022 or the direction/velocity data 1021, further analysis 1028 may be required.

In some embodiments, the race-track driving mode determination module 1024 may be part of the processor 150.

FIG. 10C shows a flow diagram/ flow chart of a method 1030 for determining adverse weather or environmental pollution based on particulate matter sensor data 1041, location sensor data 1042, weather data 1043, and/or image data 1044. The adverse weather/ environmental pollution may include one or more of heavy rain, snow, volcanic ash, and/or sandstorm.

The weather data 1043 may be obtained from a weather information provider or other weather data source, and may include data obtained from on-board sensors of the vehicle 600. In some embodiments, the weather data source may be a remote cloud server. The weather data may be indicative of rain, heavy rain, snow, volcanic ash, sandstorm, air temperature, air relative humidity, etc. of a particular region or location of the vehicle 600 is determined to be, based on the location sensor data 1042. Alternatively, or in addition (for example, to augment data), on-board vehicle sensors (e.g. sensors 620) may include temperature, humidity, pressure sensors etc. to detect weather conditions and obtain weather data. For example, on-board temperature sensors of the vehicle can be used to obtain air temperature outside the vehicle 600. Such data may be read via the vehicle data communication bus, for example, a controller area network (CAN) bus, of most vehicles. Air relative humidity data of the air outside the vehicle can also be obtained from the on-board sensors, for example, in a similar manner as outside air temperature. In another example, one or more image sensors, such as cameras or video cameras, may be used to obtain image data 1044 via continuous streaming or at a pre-determined interval. The various sensor data could be analyzed by a classifier module to determine the type of adverse weather for the classification of images around the vehicle's surroundings, wherein the image classifier module may be an artificial intelligence (AI) or machine learning based classifier module and may be trained with a training data set of labelled images of one or more of rain, heavy rain, snow, volcanic ash, sandstorm, and other weather events. The meaning of images in this context may further include video clips/data.

The AI or machine learning may be trained based on supervised learning, un-supervised learning, or a hybrid of the aforementioned.

If an adverse weather is determined 1046 based on the module 1045, the operation state of the suction device 110 is set to the disable suction device state 1047. Otherwise, further analysis 1048 may be carried out, or the operation state of the suction device 110 may be set to the enable suction device state.

In some embodiments, a rain event can be detected by water or moisture sensors arranged on an exterior area/ region of the vehicle. The classification of a rain event as adverse weather may be based on the intensity of rain, i.e. a heavy rain event may be indicative of adverse weather. In some embodiments, the heavy rain event may be based on further information obtained from remote weather data source, for example when the precipitation rate is more than a pre-determined rate, for example more than 7.6 millimeters (mm) per hour. The information relating to the pre-determined rate may be obtained from the weather data source as described above.

In the case where the rain event is detected to be a heavy rain event, the operation state of the suction device 110 may be determined to be the disable suction device state. This may be based on a preference or a requirement to protect the filter element 120 and/or other parts of the filter system from water, therefore the filter element 120 may be disabled when there is heavy rain. In addition, rain tends to reduce the particulate matter suspended in air, and therefore filtration during rain may not be required. The remaining useful life (RuL) of the filter element 120 and/or the electrical power mileage of the vehicle may be increased.

In some embodiments, instead of detecting a heavy rain event to determine the disable suction device state, a less heavy rain or mere detection of presence of a rain event may be used to determine the disable suction device state.

In some embodiments, particulate matter sensors may be positioned around the vehicle to detect particles in the air/environment surrounding the vehicle 600. In the case of a nearby volcanic eruption or sandstorm event, the concentration of coarse particles in the air that may be detected by the particulate matter sensors is relatively high. Enabling the suction device 110 may result in fast loading of the filter element 120 or filter unit 126. Operating the filter unit 126 in volcanic eruption or sandstorm event will unlikely make any considerable impact in the air due to excessively high pollution caused by the ash or the sand in the air surrounding the vehicle 600. The operation state of the suction device 110 will therefore be determined to be the disable suction device state.

In some embodiments, the detection of environmental pollution above a pre-determined threshold surrounding the vehicle 600 may cause the operation state of the suction device 110 to be in the disable suction device state. The detection of environment pollution above the pre-determined threshold may be deemed as excessive pollution.

In some embodiments, the particulate matter sensor data, 1041, location sensor data 1042, and weather data 1043 may be used for the detection of environment pollution, such as air-pollution.

It is appreciable that in an environment of high external pollution, e.g., the concentration of particulate matter is above a pre-determined threshold, filtering braking dust via enabling the suction device 110 may not make a great impact, and may unnecessarily load the brake dust filter such that maintenance and replacement is needed earlier than when only filtering vehicle generated particles.

It is therefore appreciable that not operating the (brake dust) filter element 120 or filter unit 126 in highly polluted areas may extend (or avoid excessive reduction) of the remaining useful life of the filter.

In some embodiments, as an alternative or in addition to the real-time determination of particle concentration in the environment of the vehicle, the processor 150 may be configured to receive average and/or historical pollution data.

In some embodiments, historical data may be obtained from an external database (not shown), for example a pollution data information service which may also be integrated or form part of the weather database.

In some embodiments, the particulate matter concentration, such as selected from as one or more of: PM10, PM5, PM2.5, PM1 may be obtained from respective particulate matter sensor(s) arranged such as to measure exterior air (exterior to the vehicle), for example from a fresh air intake of any of the vehicle's air handling systems, such as from a cabin air filtration system.

In some embodiments, a pre-determined threshold of a high coarse dust concentration may be set, in an example, as PM10 concentration equal or above 1000 microgram per meter cube.

In some embodiments, a geographical area may be defined as highly polluted if a particulate matter concentration is above the aforementioned pre-determined threshold. For example, a geographical area may have a high coarse dust concentration. In examples, the high coarse dust concentration may be a current value, such as real-time, near real time, or may be an average, for example, a weighted average giving more weight to more recent pollution data and less weight to older pollution data. In some embodiments, near real-time may mean data having a delay from its acquisition of less than a pre-determined time of a few minutes, for example, less than 10 minutes, less than 5 minutes, less than 3 minutes, less than 2 minutes, or less than 1 minute. In some embodiments, real time may mean data having a delay from its acquisition of less than a pre-determined time of a few seconds, for example less than 20 seconds, less than 10 seconds, or less than 5 seconds.

In some embodiments, the geographical area may be a pre-determined area centered on the vehicle, for example a circle of a pre-determined radius. In another embodiment, the geographical area may be defined by the positions corresponding to a map (e.g., a geofence). In yet another embodiment, the geographical area may be defined as the grid area in which overlaps with the vehicle's position. A map may be divided by a grid, and the pollution information may be continuously determined, stored in a database by grid, and a data of a specific grid may be requested by the vehicle and provided to the vehicle on demand.

In the various embodiments, the on-board sensors of the vehicle may include, for example, radar, optical (lidar, laser range, LED range, imaging sensors, such as cameras), sonar (or other equivalent sensor), acceleration sensor, and inclination sensor. One non-limiting example of the inclination sensor may be a multidimensional acceleration sensor that can measure acceleration in several directions from which the inclination may be determined. The data from any of such sensors may be obtained, in examples, via a vehicle's communication bus, e.g. a CAN bus connected to the sensors or from the ECU or other controller that is operably coupled to the sensor. Some of these sensors may be grouped.

In some embodiments, the one or more sensors 160 may include one or more inclination sensors configured to receive inclination data (e.g. pitch). The inclination data may be used to indicate that the vehicle 600 is driving on a down-slope. If the accelerator of the vehicle is detected not to be in use, then there is a likelihood that a braking event is happening or about to happen, for example, to maintain a relatively constant velocity. A further indicator may be that a vehicle gear may be engaged and the rounds-per-minute (RPM) of the engine is not increasing as would be expected for a measured inclination. The inclination data may be used as an input data to set the operation state of the suction device 110 to the enable suction device state based on the likelihood of the braking event happening.

In some embodiments, the image sensor of the vehicle, such as a camera, may also be used to detect braking lights ahead of the vehicle in order to determine a likelihood of braking, and hence set the operation state of the suction device to a pre-conditioning state. The camera may also be used to detect various warning lights ahead of the vehicle. The camera (or a separate camera where there are multiple cameras) may also be used to detect road signage, such as traffic lights, or a warning signs in accordance with various standards/manuals, such as rev. 3 ed 2009 Manual on Uniform Traffic Control Devices for Streets and Highways (MUTCD), USA, or part 2 of the VzKat or signs listed in annex 1 of the German StVO of 6 March 2013 BGBI. I S. 367, and/or other regulatory definitions from other jurisdictions. The image sensors may be used to capture images which may then be sent to an AI-based classification module for training and/or classification.

In some embodiments, data from various sensors of the onboard systems may also be used to augment one or more of the aforementioned sensor data. Examples of such systems may include an auto-navigation system, a driving assistance system, an anti-locking braking system (ABS), an electric power steering (EPS) system, a lane assistant system, a blind spot assistant system, a trailer condition system (where available), a brake pedal level system, acceleration pedal position. Data from one or more of the aforementioned sensors of the vehicle onboard systems may include the raw data from the sensors, and/or may further include raw data pre-processed into at least one of ABS/EPS system data, lane assistance data, blind spot data, trailer condition data, brake/acceleration pedal measurement/data.

In some embodiments, the vehicle 600 may comprise an onboard communication circuit or a camera used to receive see-through and/or traffic ahead of one or more other vehicles in front of the vehicle 600. For example, another vehicle within a pre-determined distance ahead of the vehicle 600 may be detected by the onboard communication circuit and camera. The raw data obtained, which may be in the form of images and/or reflected laser signals may be analyzed by an estimator module to compute a probability of imminent braking, and said probability may be compared against a threshold or be entered in the calculation of the estimation of a braking event to occur. The probability of the braking event may then be used to determine the operation state of the suction device 110, such as an enable suction device operation state if the probability of the braking event exceeds a threshold, thus indicating a likely or highly likely of the braking event.

In some embodiments, at least part of the data processing may be implemented in the controller 140, in one or more cloud servers, in an ECU, or in a combination thereof.

According to another aspect of the disclosure there is provided a vehicle 600 comprising one or more braking devices 200 and a filter system 100 positioned in a vicinity of the one or more braking devices 200, the filter system comprises a suction device 110 to generate an airflow 112 in the vicinity of the one or more braking devices, an airflow channel 130 positioned to allow airflow 112 generated by the suction device 110 through a filter element 120; the filter element 120 positioned to filter brake dust particles generated by the one or more braking devices 200 within the airflow 112. The filter system 100 may comprising a processor 150; and a memory having instructions stored therein, the instructions, when executed by the at least one processor 150, cause the at least one processor 150 to carry out the method in accordance with various embodiments. For example, the instructions may pertain to obtain an operating data 161, 162 of the vehicle 600; determine a prognosis of a braking event of the vehicle based on the operating data 161, 162 as input; and select a control strategy from a plurality of control strategies based on the operating data, the control strategy being associated with a plurality of operation states or filter operation modes; wherein the control strategy is different from another control strategy of the plurality of control strategies. The processor may be configured to generate a control data 152 indicative of an operation state (701, 702, 703, 704, 705) of the suction device 110, the controller 140 configured to operate the suction device 110 based on the operation state (701, 702, 703, 704, 705).

The vehicle may be fully equipped or installed with all necessary sensors required to obtain the environmental data and the driving mode data. Alternatively, the vehicle may be equipped or installed with at least one sensor and obtain sensor data from one or more remote sensors. The remote sensor may include one or more map services, weather data services, and/or historical databases of traffic information, weather, or maps.

In some embodiments, the environmental data may include glare data, for example for detecting when visibility is deteriorated due to light (such as from the Sun) shining on a driver or on sensors (such as camera) used for automated driving. In examples, the sensor may be a light intensity sensor, a camera recording a driver's face illumination, a camera watching the road in drive direction, or other sensors. The glare data may be used to estimate or improve estimations, of a probability of braking.

In some embodiments, the vehicle may be an electric car, a hybrid car, or a motorcycle.

In some embodiments, the braking initialization data, and the braking operation data may be weighted (e.g. weighted sum, weighted average) to determine the full operation state.

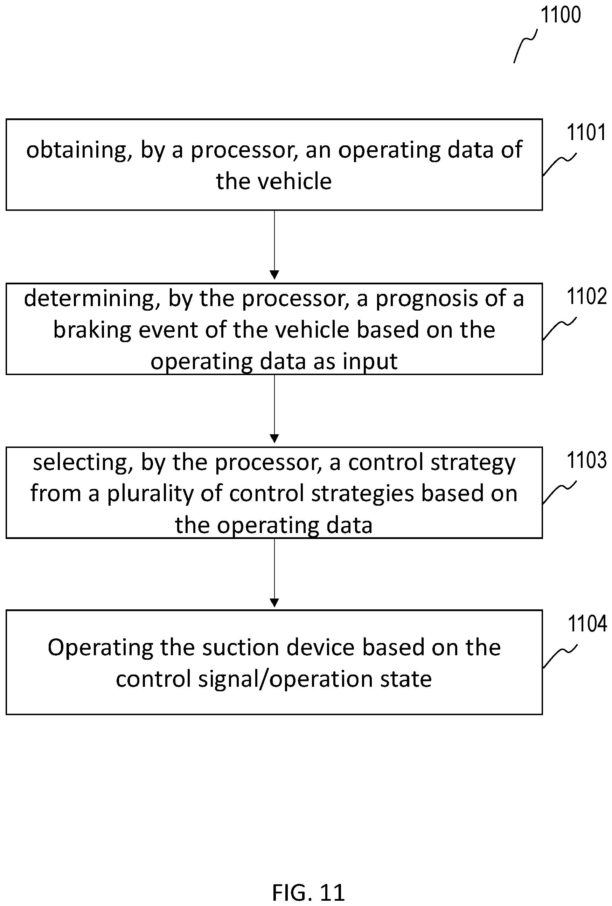

According to another aspect of the disclosure and with reference to the flow chart shown in FIG. 11, there is provided a method 1100 of operating a filter system for one or more braking devices 200 of a vehicle 600 to filter brake dust particles generated by the one or more braking devices 200, the method 1100 comprising: obtaining 1101, by a processor 150, an operating data 161, 162 of the vehicle; determining 1102, by the processor 150, a prognosis of a braking event of the vehicle based on the operating data as input; and selecting 1103, by the processor 150, a control strategy from a plurality of control strategies based on the operating data 161, 162, the control strategy associated with at least one operation state of the suction device; wherein the control strategy is different from another control strategy of the plurality of control strategies.

In some embodiments, the processor 150 is configured to generate 1105 a control data to a controller indicative of the operation state of the suction device, the controller may be configured to operate the suction device 110 based on the control strategy and operation state(s).

The method 1100 may be coded as a computer program/product for execution in the processor 150 and/or controller 140.

Although FIG. 11 shows example blocks of method 1100, in some embodiments, two or more of the blocks of method 1100 may be combined or performed in parallel.

In one general aspect, computer program product may include a computer program product. Other embodiments of this aspect include corresponding computer systems, apparatus, and computer programs recorded on one or more computer storage devices, each configured to perform the actions of the method 1100.

According to another aspect of the disclosure, there is provided a computer program product, comprising software instructions installed thereon, such that when executed on the processor, executes the method of operating a filter system for one or more braking devices of a vehicle.

In some embodiments, the operation states may include an idle state, a post-conditioning state, a full operation (suction) state.

In some embodiments, the enable suction device operation state may be associated with a probability of a braking event.

In addition to the aforementioned sensors and/or sensor data, other possible sensor data that may be applicable to the present disclosure include acceleration sensors to determine longitudinal acceleration around a center position, emergency brake assistant data to determine a full operation intensity or load of the suction device, a flash data, a blind spot assistant data or lane departure warning active data, fan standby data, trailer detection data, blower set-up data, brake in more load data.

In some embodiments, the communication interface 412, 412A, 412B may be configured to obtain data from data sources such as Google data, Traffic Message Channel (TMC), live traffic (Car2Car) communication.

Various embodiments of the disclosure further provide a computer program product, comprising software instruction installed thereon, such that when executed by the processor, executes steps 1101 to 1104 of method 1100 described with reference to FIG. 11.

In some embodiments, wherein the vehicle is a train or a part thereof, e.g., a carriage (also named wagon), the communication interface may be configured to obtain data from and/or via a train signaling system, for example, European Train Control System ETCS, based on ETCS (like Chinese Train Control System (CTCS)) or similar. Such data may include information on track availability which may be used to estimate probability of braking.

The present disclosure provides an improved system for filtering brake dust particles generated by one or more braking devices of a vehicle. By determining a driving mode of the vehicle and a probability of braking, control strategies may be generated and/or selected. Each control strategy may include a plurality of operations state of the suction device which will determine a suitable filtering mode for the suction device based on the probability of braking event and vehicle driving mode. In some embodiments, the suction device, and therefore brake particle filter system, can be protected during adverse weather, pollution or other adverse conditions. In some embodiments, traffic information can be used to prepare the filter system for upcoming brake events.

The present disclosure provides for significant advantage regarding energy consumption and separation efficiency within a vehicle where the non-exhaust emissions needs to be controlled. For example, a regulatory emission limit requirement may be kept satisfied by discounting the absorbed brake dust from the total emissions.

While the disclosure has been particularly shown and described with reference to specific embodiments, it should be understood by those skilled in the art that various changes in form and detail may be made therein without departing from the scope of the disclosure as defined by the appended claims. The scope of the disclosure is thus indicated by the appended claims.

## Claims

1. A filter system (100) for one or more braking devices (200) of a vehicle (600A, 600B), the filter system (100) comprising:
a suction device (110) configured to generate an airflow (112) in a vicinity of the one or more braking devices (200);
a filter element (120) for filtering brake dust particles generated by the one or more braking devices (200);
an airflow channel (130) positioned to allow the airflow (112) generated by the suction device (110) through the filter element (120);
a controller (140) for operating the suction device (110); and
a processor (150) arranged in data communication with the controller (140), the processor (150) configured to obtain an operating data (161, 162) of the vehicle; determine a prognosis of a braking event of the vehicle based on the operating data (161, 162) as input; and select a control strategy from a plurality of control strategies (800, 810, 900, 950) based on the operating data (161, 162), the control strategy (800, 810, 900, 950) associated with a plurality of operation states (701, 702, 703, 704, 705); wherein the control strategy is different from another control strategy of the plurality of control strategies; and wherein the processor (150) is configured to generate a control data (152) to the controller (140) indicative of at least one operation state of the plurality of operation states (701, 702, 703, 704, 705) of the suction device (110).

2. The filter system (100) of claim 1, wherein the operation data (161, 162) of the vehicle comprises at least one of a driving mode data and a location data.

3. The filter system (100) of claim 2, wherein the driving mode is an express way driving mode (712), an urban road driving mode (711), or a congestion driving mode (713).

4. The filter system (100) of any of the preceding claims, wherein the prognosis of the braking event comprises at least one of a first probability estimate of the braking event after a previous braking event, a second probability estimate of the braking event occurring within a pre-determined time period, and a third probability estimate of a next braking event after the braking event.

5. The filter system (100) of claim 4, wherein the probability estimate is compared with a pre-determined threshold, and wherein the control strategy (800, 810, 900, 950) is selected based on the comparison.

6. The filter system (100) of claims 3 and 5, wherein the plurality of control strategies (800, 810, 900, 950) comprise a first control strategy associated with the express way driving mode (712), a second control strategy associated with the urban road driving mode (711), and a third control strategy associated with the congestion driving mode (713), and wherein, optionally, each of the first control strategy, the second control strategy, and the third control strategy comprises at least one operation profile of the suction device, wherein the at least one operation profile is formed from the plurality of operation states (701, 702, 703, 704, 705).

7. The filter system (100) of claim 6, wherein the plurality of operation states (701, 702, 703, 704, 705) comprises at least two of the following: a pre-conditioning state (701), an idle state (702), and a post-conditioning state (704).

8. The filter system (100) of claim 7, wherein the first control strategy, the second control strategy, and the third control strategy differ from one another based on at least one of the following: a sequence of the plurality of operation states forming the operation profile, an operation time of any one of the pre-conditioning state (701), the idle state (702), and/or the post-conditioning state (704).

9. The filter system (100) of any of the preceding claims, wherein the prognosis is obtained based on inputting the operating data to an analysis module, the analysis module comprises a probability estimator (404A, 404B), a machine learning module, or a combination of the probability estimator (404A, 404B) and the machine learning module.

10. The filter system of any of the preceding claims, wherein the one or more braking devices (200) comprise at least one frictional braking device, the frictional braking device comprises a brake disc (202) and at least one brake pad (203).

11. The filter system (100) of any one of the preceding claims, wherein the at least one operation state comprises a disable suction device state, and wherein optionally the disable suction device state is determined based on a positive determination of the vehicle in operating in an off-road driving mode, a race-driving mode, or wherein the vehicle is operating in an environment of an adverse weather, or an excessively polluted condition.

12. The filter system (100) of any one of the preceding claims, wherein the controller (140) comprises a driver circuit (142) to obtain the control data (152) from the processor (150) as an input and provide a drive signal (146) to adjust a rotational frequency of a motor based on the drive signal (146), or wherein the controller (140) is integrated with the processor (150) to directly send the drive signal (146) to the motor to adjust the rotational frequency, and wherein a higher rotational frequency is associated with a higher suction power of the suction device.

13. The filter system of claims 6 to 8, and 12, wherein the rotational frequency of the idle state (702) is lower than the rotational frequency of the pre-conditioned state (701), wherein the rotational frequency of the rest state (705) is lower than the rotational frequency of the idle state (702), and wherein optionally, the rotational frequency of a post-conditioned state (704) is higher than the rotational frequency of the pre-conditioned state (701).

14. A vehicle (600) comprising one or more braking devices (200) and a filter system (100) positioned in a vicinity of the one or more braking devices (200), the filter system (100) comprises a suction device (110) to generate an airflow (112) in the vicinity of the one or more braking devices (200), an airflow channel (130) positioned to allow airflow generated by the suction device (110) through a filter element (120), the filter element (120) positioned to filter brake dust particles generated by the one or more braking devices (200) within the airflow (112), the filter system (100) comprising at least one processor (150); and a memory having instructions stored therein, the instructions, when executed by the at least one processor (150), causes the at least one processor (150) to: obtain an operating data (161, 162) of the vehicle (600); determine a prognosis of a braking event of the vehicle based on the operating data (161, 162) as input; and select a control strategy (800, 810, 900, 950) from a plurality of control strategies (800, 810, 900, 950) based on the operating data (161, 162), the control strategy (800, 810, 900, 950) associated with a plurality of operation states; wherein the control strategy (800, 810, 900, 950) is different from another control strategy of the plurality of control strategies (800, 810, 900, 950); and wherein the processor (150) is configured to generate a control data (152) to a controller (140) indicative of at least one operation state of the plurality of operation states of the suction device, the controller (140) configured to operate the suction device based on the at least one operation state.

15. A method (1100) of operating a filter system (100) for one or more braking devices (200) of a vehicle (600) to filter brake dust particles generated by the one or more braking devices (200), the method comprising:
obtaining (1101), by a processor (150), an operating data (161, 162) of the vehicle;
determining (1102), by the processor (150), a prognosis of a braking event of the vehicle based on the operating data as input; and
selecting (1103), by the processor (150), a control strategy from a plurality of control strategies based on the operating data, the control strategy associated with a plurality of operation states;
wherein the control strategy (800, 810, 900, 950) is different from another control strategy (800, 810, 900, 950) of the plurality of control strategies (800, 810, 900, 950); and
wherein the processor (150) is configured to generate a control data (152) to a controller (140) indicative of at least one operation state (701, 702, 703, 704, 705) of a suction device, the controller configured to send the control data to operate the suction device based on the operation state.

16. A computer program product, comprising software instructions installed thereon, such that when executed on the processor, executes the steps of claim 15.

17. A filter system controller (140) for providing control strategy (701, 702, 703, 704, 705) for operating a filter system (100) of a vehicle, the filter system (100) comprising a processor (150) configured to:
obtain an operating data (161, 162) of the vehicle (600);
determine a prognosis of a braking event of the vehicle based on the operating data (161, 162) as input;
select a first control strategy and/or a second control strategy from a plurality of control strategies (800, 810, 900, 950) based on the operating data (161, 162); and
wherein the first control strategy is different from the second control strategy.
